(19) **Europäisches Patentamt European Patent Office Office européen des brevets**

(11) **EP 4 452 584 B1**

(12) **EUROPÄISCHE PATENTSCHRIFT**

(45) Veröffentlichungstag und Bekanntmachung des Hinweises auf die Patenterteilung:
**26.11.2025  Patentblatt 2025/48**

(21) Anmeldenummer: **22830476.2**

(22) Anmeldetag: **05.12.2022**

(51) Internationale Patentklassifikation (IPC):
**B27N 3/04** *(2006.01)*      **C08F 2/22** *(2006.01)*
**C08F 212/08** *(2006.01)*    **C08F 220/14** *(2006.01)*
**B27N 3/00** *(2006.01)*      **B29C 70/42** *(2006.01)*
**C08F 220/06** *(2006.01)*    **C08F 222/02** *(2006.01)*

(52) Gemeinsame Patentklassifikation (CPC):
(C-Sets verfügbar)
**B29C 70/12; B27N 1/00; B27N 3/002; B27N 3/04;**
**B27N 7/005; C08F 2/26; C08F 220/14;**
**C08F 265/02; C08J 5/045;** B29C 70/003;
B29C 70/42; B29K 2311/10; C08F 212/08;
C08F 220/06; C08J 2333/10          (Forts.)

(86) Internationale Anmeldenummer:
**PCT/EP2022/084444**

(87) Internationale Veröffentlichungsnummer:
**WO 2023/117394 (29.06.2023 Gazette 2023/26)**

(54) **VERFAHREN ZUR HERSTELLUNG EINES THERMOVERFORMBAREN POLYMER/ FASER-KOMPOSITS**

PROCESS FOR THE FABRICATION OF A THERMOFORMABLE POLYMER FIBRE COMPOSITE

PROCÉDÉ DE FABRICATION DE COMPOSITE POLYMÈRE FIBRE THERMOFORMABLE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **20.12.2021  EP 21215947**

(43) Veröffentlichungstag der Anmeldung:
**30.10.2024  Patentblatt 2024/44**

(73) Patentinhaber: **BASF SE**
**67056 Ludwigshafen am Rhein (DE)**

(72) Erfinder:
• **KALBE, Michael**
**67056 Ludwigshafen (DE)**

• **SCHEIDHAUER, Rainer**
**67454 Hassloch (DE)**
• **TURCINSKAS, Sarunas**
**67056 Ludwigshafen (DE)**
• **BLAUL, Juergen**
**67056 Ludwigshafen (DE)**
• **STEUBE, Marvin**
**67056 Ludwigshafen (DE)**

(74) Vertreter: **BASF IP Association**
**BASF SE**
**GBI - Z078**
**67056 Ludwigshafen (DE)**

(56) Entgegenhaltungen:
**EP-A1- 3 741 793      EP-B1- 0 882 093**
**WO-A1-2017/140520**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

    C-Sets
    **C08F 220/14, C08F 2/26;**
    **C08F 265/02, C08F 212/08, C08F 220/14,**
    **C08F 220/1804, C08F 220/325;**

C08F 212/08, C08F 2/26;
C08F 212/08, C08F 220/14, C08F 220/1804;
C08F 212/08, C08F 220/14, C08F 220/1804,
C08F 220/325;
C08F 220/06, C08F 222/02

**Beschreibung**

Die Erfindung betrifft ein Verfahren zur Herstellung eines thermoverformbaren Polymer/Faser-Komposit unter Verwendung eines Polymers P polymerisiert in Gegenwart eines Acrylsäure-Copolymers. Die Erfindung betrifft auch die nach dem erfindungsgemäßen Verfahren erhältlichen Komposite, deren unterschiedliche Verwendungen, ein Verfahren zur Herstellung von Polymer/Faser-Formteilen durch Thermoverformung des Polymer/Faser-Komposits sowie die erhaltenen Polymer/Faser-Formteile selbst.

Die Herstellung von Holzfaserplatten erfolgt im Wesentlichen ausgehend von Hackschnitzeln, die hydrothermisch mittels Wasserdampf vorbehandelt werden, anschließend unter Druck und Temperaturen oberhalb 140°C behandelt und schließlich ebenfalls unter Druck in sogenannten Refinern zerfasert werden. Daran anschließend wird der erhaltene wässrige Holzfaserbrei in die sogenannte Blowline überführt, einem Rohr, welches einen deutlich geringeren Druck aufweist, was dazu führt, dass das Wasser verdampft und so als gasförmiges Transportmittel für die Holzfasern durch die Blowline dient (hydropneumatische Förderung). Durch zusätzliches Einblasen von aufgeheizter trockener Luft in die Blowline werden die Holzfasern getrocknet und pneumatisch weitertransportiert. Um einen möglichst gleichmäßigen Auftrag des zur Herstellung der Holzfaserplatten benötigten wässrigen Bindemittel auf den Fasern zu gewährleisten, wird das Bindemittel vor dem Einblasen der aufgeheizten trockenen Luft an einer oder mehreren Stellen in die Blowline eingesprüht. Die nach der Trocknung anfallenden "beleimten" Fasern werden abgeschieden und in einen Faserflor (Fasermatte) überführt. Diese Fasermatte wird gegebenenfalls mittels einer ‚kalten' Vorverdichtung komprimiert und anschließend unter Druck und hoher Temperatur (150 bis 230 °C) zu einem plattenförmigen Holzwerkstoff mit einer Dichte von 250 bis 1000 kg/m$^3$ verpresst ("warme" Verdichtung). Unter den Verdichtungstemperaturen bildet sich aus den Bindemitteln wie Formaldehydharze, beispielsweise Harnstoff/Formaldehyd-, Phenolformaldehyd-, Melaminformaldehyd-, Melamin/Harnstoff/Formaldehyd- oder Melamin/Phenol/Formaldehyd-Harze oder Isocyanate, wie Methylendiisocyanat oder Toluidendiisocyanat ein duroplastisches Bindemittel aus. Durch die Verwendung thermisch härtbarer Bindemittel sind die so erhaltenen Holzfaserplatten nach der "warmen" Verdichtung duroplastisch, also nicht mehr thermisch verformbar.

Die WO 01/27163 lehrt thermisch härtbare Polymerdispersionen sowie ihre Verwendung zur Herstellung von duroplastischen Polymer/Faser-Kompositen. Eine Anwendung ist die Herstellung von Holzfaserplatten, deren Fasern nach dem "Blow-Line"-Verfahren beleimt werden. Die gemäß der Lehre der WO 01/27163 eingesetzten Styrolacrylate werden in Gegenwart von carboxylgruppentragenden Polymerisaten hergestellt, deren Bausteine Maleinsäureanhydrid, Acrylsäure und Acrylsäure/Maleinsäureestern mit einem ethoxylierten Oleylamin sind. Dieses carboxylgruppentragende Polymerisat ist dabei ein polymeranalog hergestelltes Kammpolymer mit hydrophoben Resten, die zugleich aufgrund des Aminorestes thermisch vernetzbar sind. Das Produkt ist somit auch hier ein Duroplast, also nach der thermischen Härtung nicht mehr verformbar.

Die WO 2017/140520 lehrt das "Beleimen" von Holzfasern in der Blowline mit einer thermisch nicht vernetzenden Polymerdispersion und das anschließende Verpressen zu Faserplatten, die trotz Verdichtung unter hohen Temperaturen anschließend noch verformbar sind. Die hiernach eingesetzten Bindemittel sind Styrol/Methacrylat-Polymere, welche durch Polymerisation in Gegenwart eines Polymers aufgebaut aus 95 Gew.-Teilen Acrylsäure erhalten werden. Das Styrol/Methacrylat-Polymer enthält 5 Gew.-% weitere Monomere einpolymerisiert. Die hiermit erhaltenen Formkörper sind thermisch verformbar und haben dennoch eine gute Gebrauchsfestigkeit. Allerdings ist es wünschenswert, dass ihre Wasserbeständigkeit noch verbessert wird, damit die Formkörper beispielsweise auch in Feuchträumen oder in Außenanwendungen eingesetzt werden können.

Der vorliegenden Erfindung lag daher als Aufgabe zugrunde, ein Polymer/Faser-Komposit zu finden, welches sich thermisch zu Formkörpern verformen lässt, die sowohl eine gute mechanische Festigkeit wie auch eine Formbeständigkeit in Feuchtklima aufweisen.

Die Aufgabe wird erfindungsgemäß gelöst durch ein Verfahren zur Herstellung eines thermoverformbaren Polymer/Faser-Komposits unter Verwendung eines Polymeren P und eines faserförmigen Substrats, wobei letzteres Partikel mit einem Verhältnis von ihrer längsten Ausdehnung zu ihrer kürzesten Ausdehnung von wenigstens 3, also ≥ 3, bevorzugt ≥ 5 sind, wobei

- das faserförmige Substrat, in einen Gasstrom eingebracht wird, danach

- das faserförmige Substrat im Gasstrom mit einer wässrigen Dispersion eines Polymeren P mit einer Glasübergangstemperatur $T_g$ ≥ 35 und ≤ 150 °C gemessen nach DIN EN ISO 11357-2 (2013-09) in Kontakt gebracht wird, danach

- das mit der wässrigen Dispersion des Polymeren P in Kontakt gebrachte faserförmige Substrat im Gasstrom getrocknet und anschließend abgeschieden wird, danach

- das erhaltene abgeschiedene faserförmige Substrat in einen Faserflor überführt wird, und danach

- der erhaltene Faserflor bei einer Temperatur ≥ der Glasübergangstemperatur $T_g$ des Polymers P zu dem Polymer/-Faser-Komposit verdichtet wird, wobei sich die Dichte des Polymer/Faser-Komposits im Vergleich zum entsprechenden Faserflor um einen Faktor ≥ 3 erhöht,

dadurch gekennzeichnet, dass die wässrige Dispersion des Polymeren P erhalten wird durch radikalisch initiierte Emulsionspolymerisation einer Monomerzusammensetzung aus

| | |
|---|---|
| 5 bis 30 Gew.-%, | eines oder mehrerer Monomere M1, ausgewählt unter Estern der Acryl-und/oder Methacrylsäure mit 2 bis 8 C-Atome aufweisenden Alkanolen |
| 70 bis 95 Gew.-% | Styrol und/oder Methylmethacrylat (Monomere M2), und |
| 0 bis 10 Gew.-% | wenigstens einer weiteren ethylenisch ungesättigten Verbindung (Monomer M3), welche mit den Monomeren M1 und M2 copolymerisierbar ist, |

jeweils bezogen auf die Gesamtmenge der Monomere M,
in einem wässrigen Medium in Gegenwart eines Polymers A oder einer Polymermischung A, wobei das Polymere A und die Polymermischung A jeweils aufgebaut ist aus

| | |
|---|---|
| 40 bis 70 Gew.-% | Acrylsäure (Monomer A1), |
| 30 bis 60 Gew.-% | Maleinsäure und/oder Maleinsäureanhydrid (Monomer A2), |
| 0 bis 5 Gew.-% | wenigstens einer weiteren ethylenisch ungesättigten Verbindung, welche mit den Monomeren A1 und A2 copolymerisierbar ist (Monomer A3), |

und wobei sich die Gesamtmengen der Monomere A zu 100 Gew.-% addieren,
mit der Maßgabe, dass weder das Polymer A noch die Polymermischung A aufgebaut ist aus einem Ester, der ausgewählt ist unter den Estern ethylenisch ungesättigter Monocarbonsäuren mit mindestens zwei Hydroxylgruppen aufweisenden Aminen, den Halbestern und den Diestern ethylenisch ungesättigter Dicarbonsäuren mit mindestens zwei Hydroxylgruppen aufweisenden Aminen.

Die vorliegende Erfindung betrifft weiterhin die nach dem erfindungsgemäßen Verfahren erhältlichen Polymer/-Faser-Komposite.

Weiterhin betrifft die vorliegende Erfindung, die Verwendung des Polymer/Faser-Komposits zur Herstellung eines Polymer/Faser-Formteils, welches sich in seiner Form vom eingesetzten Polymer/Faser-Komposit unterscheidet sowie das Verfahren zu seiner Herstellung, indem man das Polymer/Faser-Komposit auf eine Temperatur oberhalb der Glasübergangstemperatur $T_g$ des Polymer P aufheizt, bei einer Temperatur ≥ $T_g$ in die gewünschte Form des Polymer/-Faser-Formteils bringt und danach das erhaltene Polymer/Faser-Formteil unter Beibehaltung seiner Form auf eine Temperatur unterhalb der Glasübergangstemperatur $T_g$ des Polymer P abkühlt. Die vorliegende Erfindung betrifft somit auch das hiernach erhältliche Polymer/Faser-Formteil sowie seine Verwendung als Möbelformteil oder Wanddekorteil oder Interieurbauteil in Automotive Anwendungen.

Weiterhin betrifft die vorliegende Erfindung die erfindungsgemäß eingesetzte wässrige Dispersion des Polymeren P sowie ein Verfahren zu seiner Herstellung.

Ein kennzeichnendes Merkmal des erfindungsgemäßen Verfahrens ist, dass ein faserförmiges Substrat in einen Gasstrom eingebracht wird. Erfindungsgemäß können alle faserförmigen Substrate eingesetzt werden. Dabei soll unter einem faserförmigen Substrat solche Partikel verstanden werden, deren Verhältnis von ihrer längsten Ausdehnung zu ihrer kürzesten Ausdehnung wenigstens 3, bevorzugt ≥ 5, vorteilhaft ≥ 10 und insbesondere vorteilhaft ≥ 50 und deren kürzesten Ausdehnung ≤ 2 mm, vorteilhaft ≥ 0,001 und ≤ 0,5 mm und insbesondere vorteilhaft ≥ 0,001 und ≤ 0,1 mm beträgt. Dabei wird die kürzeste Ausdehnung in einem Winkel von 90 ° zur Verbindungslinie ihrer längsten Ausdehnung bestimmt.

Bei den faserförmigen Substraten kann es sich um Naturfasern, wie pflanzliche, tierische und mineralische Fasern oder um künstlich hergestellte Chemiefasern aus natürlichen oder synthetischen Polymeren handeln. Beispiele für pflanzliche Fasern sind Baumwollfasern, Flachsfasern, Hanffasern, Kenaffasern, Jutefasern, Holzfasern oder Sisalfasern, Beispiele für tierische Fasern sind Wolle oder andere Tierhaare, ein Beispiel für mineralische Fasern ist Steinwolle, ein Beispiel für Chemiefasern natürlichen Ursprungs sind Viskosefasern und Beispiele für Chemiefasern auf Basis synthetischer Polymere sind Polyesterfasern, wie Polytrimethylenterephthalat-, Polyethylennaphthalat-, Polyethylenterephthalat- oder Polybutylenterephthalatfasern sowie die unterschiedlichen Polycarbonatfasern, Polyolefinfasern, wie insbesondere Polyethylen- oder Polypropylenfasern, Polyamidfasern, wie Polycaprolactamfasern (Polyamid 6), Polyamidfasern aus Hexamethylendiamin und Adipinsäure (Polyamid 6,6), Polyamidfasern aus Hexamethylendiamin und Terephthalsäure (Polyamid 6T), Polyamidfasern aus para-Phenylendiamin und Terephthalsäure (Aramid) sowie Mineralfasern, wie Glasfasern, Carbonfasern oder Basaltfasern. Mit Vorteil werden erfindungsgemäß jedoch Naturfasern, insbesondere pflanzlichen Ursprungs und insbesondere vorteilhaft Holzfasern eingesetzt, wie sie insbesondere aus einem Refiner erhalten werden.

Unter einem Gasstrom soll im Rahmen der vorliegenden Erfindung der gerichtete Transport eines gasförmigen Stoffes entlang eines Druckgefälles, beispielsweise in einem Behälter oder in einem Rohr, verstanden werden. Prinzipiell können alle Stoffe eingesetzt werden, welche unter den Transportbedingungen (insbesondere Druck und Temperatur) gasförmig sind. Beispielsweise werden organische und/oder anorganische Lösungsmitteldämpfe, wie insbesondere vorteilhaft Wasserdampf oder stickstoffhaltige Gasgemische, wie insbesondere Luft eingesetzt. Erfindungsgemäß vorteilhaft werden Wasserdampf/Luft-Gemische in breitem Mischungsverhältnis eingesetzt.

Erfindungsgemäß wird das faserförmige Substrat im Gasstrom mit der wässrigen Dispersion des Polymeren P in Kontakt gebracht. Erfolgt dieses Inkontaktbringen in einer Blowline, vorteilhaft über ein oder mehrere Einspritzdüsen, so ist darauf zu achten, dass das Inkontaktbringen in der Blowline in Strömungsrichtung an einer Stelle oder mehreren Stellen erfolgt, bevor die aufgeheizte trockene Luft zur Trocknung der Holzfasern eingeblasen wird.

Daran anschließend wird das mit der wässrigen Dispersion des Polymeren P in Kontakt gebrachte faserförmige Substrat im Gasstrom getrocknet und anschließend abgeschieden. Die Trocknung des erhaltenen faserförmigen Substrats erfolgt beispielsweise durch Abtrennung und Kondensation des Wasserdampfes oder in einer Blowline durch Einbringen von so viel aufgeheizter trockener Luft, dass die relative Luftfeuchtigkeit im resultierenden Gasgemisch auf $\leq$ 10 % oder sogar $\leq$ 5 % abgesenkt wird. Durch diese Maßnahme erfolgt die Trocknung des Gemisches aus faserförmigem Substrat und Polymeren P. Unter Trocknung soll im Rahmen dieser Schrift verstanden werden, wenn der Restfeuchtegehalt des Substrat/Polymer-Gemisches auf $\leq$ 15 Gew.-% und vorteilhaft auf $\leq$ 10 Gew.-% herabgesetzt wird. Unter Restfeuchtegehalt wird im Rahmen dieser Schrift die prozentuale Gewichtsdifferenz, bezogen auf das eingesetzte Substrat/Polymer-Gemisch, verstanden, welche sich ergibt, wenn man 1 g Substrat/Polymer-Gemisch im Trockenschrank für eine Stunde bei 120 °C trocknet. Die Abscheidung des Substrat/Polymer-Gemisches erfolgt nach den üblichen Methoden zur Feststoffabscheidung aus Gasgemischen, wie beispielsweise durch Siebe oder durch Ausnutzung von Zentrifugalkräften über Zyklonabscheider.

Daran anschließend wird das erhaltene abgeschiedene Substrat/Polymer-Gemisch erfindungsgemäß in einen Faserflor überführt, beispielsweise durch entsprechendes Aufstreuen des abgeschiedenen Substrat/Polymer-Gemisches auf eine Fläche oder im kontinuierlichen Betrieb auf ein Förderband. Dieser Faserflor kann, gegebenenfalls nach einer mechanischen Vorverdichtung bei einer Temperatur deutlich, in der Regel mindestens 10 Kelvin, unterhalb der Glasübergangstemperatur $T_g$ des Polymers P, eine Dicke von $\geq$ 1 und $\leq$ 50 cm, vorteilhaft $\geq$ 1 und $\leq$ 30 cm und insbesondere vorteilhaft $\geq$ 1 und $\leq$ 15 cm und eine Dichte von $\geq$ 20 und $\leq$ 700 g/l, oft $\geq$ 50 und $\leq$ 500 g/l und häufig $\geq$ 100 und $\leq$ 350 g/l aufweisen.

Daran anschließend wird der so erhaltene Faserflor bei einer Temperatur $\geq$ der Glasübergangstemperatur $T_g$ des Polymers P zu einem Polymer/Faser-Komposit verdichtet. Dabei wird unter Verdichtung verstanden, wenn der Faserflor bei dieser Temperatur unter Druck zu einem Polymer/Faser-Komposit verpresst wird. Dabei erhöht sich die Dichte des Polymer/Faser-Komposits im Vergleich zum entsprechenden Faserflor, abhängig vom eingesetzten faserförmigen Substrat, um einen Faktor $\geq$ 3 und vorteilhaft um einen Faktor $\geq$ 6. In entsprechender Weise verringert sich auch die Dicke des Polymer/Faser-Komposits im Vergleich zum entsprechenden Faserflor. Von Bedeutung in diesem Zusammenhang ist, dass das erfindungsgemäße Polymer/Faser-Komposit vorteilhaft eine flächenförmige ebene Form aufweist. Selbstverständlich kann das erfindungsgemäße Polymer/Faser-Komposit aber auch - abhängig von der gewählten Pressform - beliebige nichtebene dreidimensionale Formen aufweisen.

Verfahrenswesentlich ist, dass die erfindungsgemäße wässrige Dispersion des Polymeren P eingesetzt wird. Die vorliegende Erfindung betrifft somit auch eine wässrige Dispersion des Polymeren P erhältlich mittels radikalisch initiierter Emulsionspolymerisation einer Monomerzusammensetzung aus

| | |
|---|---|
| 5 bis 30 Gew.-%, | eines oder mehrerer Monomere M1, ausgewählt unter Estern der Acrylund/oder Methacrylsäure mit 2 bis 8 C-Atome aufweisenden Alkanolen |
| 70 bis 95 Gew.-% | Styrol und/oder Methylmethacrylat (M2), und |
| 0 bis 10 Gew.-% | wenigstens einer weiteren ethylenisch ungesättigten Verbindung (M3), welche mit den Monomeren M1 und M2 copolymerisierbar ist, |

jeweils bezogen auf die Gesamtmenge der Monomere M
in einem wässrigen Medium in Gegenwart eines Polymers A oder einer Polymermischung A, wobei das Polymere A und die Polymermischung A jeweils aufgebaut ist aus

| 40 bis 70 Gew.-% | Acrylsäure (Monomer A1), |
| 30 bis 60 Gew.-% | Maleinsäure und/oder Maleinsäureanhydrid (Monomer A2), |
| 0 bis 5 Gew.-% | wenigstens einer weiteren ethylenisch ungesättigten Verbindung, welche mit den Monomeren A1 und A2 copolymerisierbar ist (Monomer A3), |

und wobei sich die Gesamtmengen der Monomere A zu 100 Gew.-% addieren,
mit der Maßgabe, dass weder das Polymer A noch die Polymermischung A aufgebaut ist aus einem Ester, der ausgewählt ist unter den Estern ethylenisch ungesättigter Monocarbonsäuren mit mindestens zwei Hydroxylgruppen aufweisenden Aminen, den Halbestern und den Diestern ethylenisch ungesättigter Dicarbonsäuren mit mindestens zwei Hydroxylgruppen aufweisenden Aminen.

Verfahrenswesentlich ist, dass die wässrige Dispersion des Polymeren P durch radikalisch initiierte Emulsionspolymerisation einer Zusammensetzung von ethylenisch ungesättigten Monomeren M (Monomere M) in einem wässrigen Medium in Gegenwart eines Polymers A oder einer Polymermischung A hergestellt wird, wobei das Polymere A und die Polymermischung A jeweils aufgebaut ist aus

| 40 bis 70 Gew.-% | Acrylsäure (Monomer A1), |
| 30 bis 60 Gew.-% | Maleinsäure und/oder Maleinsäureanhydrid (Monomer A2), |
| 0 bis 5 Gew.-% | wenigstens einer weiteren ethylenisch ungesättigten Verbindung, welche mit den Monomeren A1 und A2 copolymerisierbar ist (Monomer A3), |

und wobei sich die Gesamtmengen der Monomere A zu 100 Gew.-% addieren.

Sofern im Rahmen dieser Anmeldung von Monomeren mit Carbonsäureresten die Rede ist, sind immer auch ihre wasserlöslichen Salze, beispielsweise die Natrium-, Kaliumsalze oder Ammoniumsalze umfasst.

Unter einer Polymermischung A ist dabei zu verstehen, dass es sich um zwei oder mehr Polymere aufgebaut aus den Monomeren A1, A2 und A3 handelt, deren Gesamtmonomermenge das erfindungsgemäße Verhältnis aufweist. Es ist somit beispielsweise möglich, dass der Acrylsäureanteil des einen Polymers größer als 70 Gew.-% ist, solange der Acrylsäureanteil des anderen Polymers kleiner ist und die Gesamtanteile erfüllt wird.

Zur Herstellung des erfindungsgemäß eingesetzten Polymers A sowie der Polymermischung A kommt als wenigstens ein Monomer A3, insbesondere eine in einfacher Weise mit Monomer A1 und A2 radikalisch copolymerisierbare ethylenisch ungesättigte Verbindungen in Betracht, wie beispielsweise Ethylen, vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itakonsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile $\alpha,\beta$-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren. Die genannten Monomere bilden in der Regel die Hauptmonomeren, die, bezogen auf die Gesamtmenge an Monomeren A3, einen Anteil von $\geq 50$ Gew.-%, bevorzugt $\geq$ 80 Gew.-% und insbesondere bevorzugt $\geq$ 90 Gew.-% auf sich vereinen oder sogar die Gesamtmenge der Monomeren A3 bilden. In aller Regel weisen diese Monomeren in Wasser bei Normalbedingungen [20 °C, 1 atm (absolut)] lediglich eine mäßige bis geringe Löslichkeit auf.

Monomere A3, die unter den vorgenannten Bedingungen eine erhöhte Wasserlöslichkeit aufweisen, sind solche, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethyla-mino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall sind die vorgenannten wasserlöslichen Monomeren A3 lediglich als modifizierende Monomere in Mengen von $\leq$ 10 Gew.-%, bevorzugt $\leq$ 5 Gew.-% und insbesondere bevorzugt $\leq$ 3 Gew.-%, bezogen auf die Gesamtmenge an Monomeren A3, enthalten.

Vorteilhaft werden zur Herstellung der Polymeren A beziehungsweise der Polymermischung A als Monomere A3 nur solche Monomerenmischungen eingesetzt, welche zu

| 90 bis 100 Gew.-% | Ester der Acryl- und/oder Methacrylsäure mit 1 bis 12 C-Atome aufweisenden Alkanolen, oder |
| 90 bis 100 Gew.-% | Styrol und/oder Butadien, oder |
| 90 bis 100 Gew.-% | Vinylacetat, Vinylpropionat und/oder Ethylen |

enthalten.

Erfindungsgemäß beträgt der einpolymerisierte Anteil an Monomeren A3 im Polymer A bzw. (beziehungsweise) der Polymermischung A 0 bis 5 Gew.-%, vorteilhaft ≤ 3 Gew.-% oder ≤ 1 Gew.-% und ≥ 0,1 Gew.-%.

In einer weiteren vorteilhaften Ausführungsform enthält das Polymere A bzw. die Polymermischung A keine Monomere A3 einpolymerisiert. Dementsprechend ist das Polymere A bzw. die Polymermischung A zu ≥ 95 Gew.-%, vorteilhaft zu ≥ 97 Gew.-% oder ≥ 99 Gew.-% und in einer weiteren Ausführungsform zu 100 Gew.-% aus Monomeren A1 + A2 in einpolymerisierter Form aufgebaut.

Wird erfindungsgemäß eine Polymermischung A eingesetzt, so kann diese durch übliches Zusammenfügen zweier Polymere A erhalten werden, die jeweils aufgebaut sind aus Acrylsäure (Monomer A1) und Maleinsäure und/oder Maleinsäureanhydrid (Monomer A2) sowie gegebenenfalls Monomeren A3. Im Fall der Polymermischung weist die Mischung die erfindungsgemäße Monomerzusammensetzung auf.

Die erfindungsgemäß eingesetzten Polymere A werden in der Regel durch radikalisch initiierte Polymerisation der Monomeren A in einem wässrigen Medium hergestellt. Mit Vorteil erfolgt die Herstellung der Polymeren A in Anwesenheit wenigstens eines Radikalkettenreglers, wobei schwefel-, stickstoff-, und/oder phosphorhaltigen Radikalkettenregler, welche bei 20 °C und 1 atm in entionisiertem Wasser eine Löslichkeit > 5 g/100 g Wasser aufweisen, besonders bevorzugt sind.

Die prinzipielle Herstellung der Polymeren A ist dem Fachmann geläufig (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988).

Als schwefelhaltige Radikalkettenregler werden beispielsweise Mercaptoalkanole, wie 2-Mercaptoethanol, 2-Mercaptopropanol oder 3-Mercaptopropanol, Alkalimetallhydrogensulfite, wie Natriumhydrogensulfit oder Kaliumhydrogensulfit, sowie Thioschwefelsäure und deren Alkalimetallsalze oder 3-Mercapto-2-aminopropansäure (Cystein), als stickstoffhaltige Radikalkettenregler beispielsweise Hydroxylamin(ammonium)-Verbindungen, wie Hydroxylammoniumsulfat und als phosphorhaltige Radikalkettenregler beispielsweise phosphorige Säure, hypophosphorige Säure, metaphosphorige Säure, Orthophosphorsäure, Pyrophosphorsäure oder Polyphosphorsäure und deren Alkalimetallsalze, insbesondere deren Natrium- oder Kaliumsalze, vorteilhaft Natriumhypophosphit oder Natriumdihydrogenphosphat eingesetzt.

Insbesondere vorteilhaft ist der Radikalkettenregler ausgewählt unter hypophosphoriger Säure und deren Alkalimetallsalze, insbesondere Natriumhypophosphit, Alkalimetallhydrogensulfite, insbesondere Natriumhydrogensulfit, Hydroxylamoniumsulfat und/oder 2-Mercaptoethanol.

Bei der Herstellung der Polymere A ist es vorteilhaft, wenn die Menge des Radikalkettenreglers so gewählt wird, dass das gewichtsmittlere Molekulargewicht der Polymere A ≥ 1000 und ≤ 20000 g/mol und insbesondere vorteilhaft ≥ 2000 und ≤ 20000 g/mol beträgt. Die erforderliche Menge des Radikalkettenreglers und die entsprechenden Polymerisationsbedingungen kennt der Fachmann oder kann von diesem in einfachen Routineversuchen ermittelt werden.

Gemäß einer bevorzugten Ausführungsform weist das Polymer A ein gewichtsmittleres Molekulargewicht Mw ≥ 1000 und ≤ 20000 g/mol auf.

Gemäß einer besonders bevorzugten Ausführungsform wird eine Polymermischung A gewählt, die

| 10 bis 30 Gew.-% | eines Polymers A mit einem gewichtsmittleren Molekulargewicht > 7000 und < 20000 g/mol (Polymer A1) und |
| 70 bis 90 Gew.-% | eines Polymers A mit einem gewichtsmittleren Molekulargewicht von 1000 bis 5000 g/mol (Polymer A2) |

bezogen auf die Gesamtmenge Polymermischung A, enthält, insbesondere daraus besteht.

Polymer A1 und Polymer A2 unterscheiden sich somit in ihrem mittleren Molekulargewicht und können sich darüber hinaus in ihrer Zusammensetzung aus den Monomeren A1, A2 und A3 unterscheiden, wobei die Gesamtmenge aller Monomere die erfindungsgemäße Zusammensetzung aufweist.

Die gewichtsmittleren Molekulargewichte der Polymere A werden in einer dem Fachmann geläufigen Art und Weise nach DIN EN ISO 13885-3 gelpermeationschromatographisch mit einer Polyacrylsäure-Natriumsalz als Standard bestimmt.

Sofern nachfolgend der Begriff "Polymer/mischung A" verwendet wird, soll dies zum Ausdruck bringen, dass dies sowohl für das Polymer A wie auch die Polymermischung A gilt.

Bei der Herstellung des erfindungsgemäß eingesetzten Polymeren P ist es möglich, gegebenenfalls eine Teil- oder die Gesamtmenge an Polymer/mischung A im wässrigen Polymerisationsmedium vorzulegen. Es ist aber auch möglich, die Gesamtmenge oder die gegebenenfalls verbliebene Restmenge an Polymer/mischung A während der Polymerisationsreaktion gemeinsam mit den Monomeren M zuzudosieren. Die Gesamtmenge oder die gegebenenfalls verbliebene Restmenge an Polymer/mischung A kann dem wässrigen Polymerisationsmedium dabei diskontinuierlich in einer oder mehreren Portionen oder kontinuierlich mit gleichbleibenden oder sich verändernden Mengenströmen zudosiert werden. Vorteilhaft wird die Gesamtmenge an Polymer/mischung A vor Auslösung der Polymerisationsreaktion der Monomeren M im wässrigen Polymerisationsmedium vorgelegt. In einer weiteren vorteilhaften Ausführungsform wird das Polymer/mischung A "in-situ" im Polymerisationsmedium für die Polymerisation der Monomeren M hergestellt.

Von Bedeutung ist, dass das wässrige Polymerisationsmedium bei der Herstellung des Polymeren P neben dem Polymer/mischung A zusätzlich noch Dispergierhilfsmittel enthalten kann, welche sowohl die Monomertröpfchen als auch die durch die radikalisch initiierte Polymerisation der Monomeren M erhaltenen Dispersionsteilchen des Polymeren P in der wässrigen Phase dispers verteilt halten und so die Stabilität der erzeugten wässrigen Polymerzusammensetzung gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961. Da das erfindungsgemäß eingesetzte Polymer/mischung A auch als Schutzkolloid wirken kann, werden erfindungsgemäß vorteilhaft keine zusätzlichen Schutzkolloide eingesetzt.

Selbstverständlich können auch Gemische aus Emulgatoren und/oder Schutzkolloiden verwendet werden. Derartige Emulgatoren sind dem Fachmann geläufig und sind beispielsweise in der WO 2017/140520 auf den Seiten 9 und 10 beschrieben.

Werden bei der Herstellung der wässrigen Dispersion des Polymeren P Dispergierhilfsmittel mitverwendet, so beträgt die Gesamtmenge an eingesetzten Dispergierhilfsmitteln, insbesondere Emulgatoren, 0,1 bis 5 Gew.-%, bevorzugt 1 bis 3 Gew.-%, jeweils bezogen auf die Gesamtmenge der Monomeren M (Gesamtmonomerenmenge M). In einer vorteilhaften Ausführungsform werden Emulgatoren als alleinige Dispergierhilfsmittel eingesetzt.

Werden bei der Herstellung der wässrigen Dispersion des Polymeren P Dispergierhilfsmittel mitverwendet, so ist es möglich, gegebenenfalls eine Teil- oder die Gesamtmenge an Dispergierhilfsmitteln als Bestandteil des das Polymer/-mischung A enthaltenden wässrigen Mediums vorzulegen. Es ist aber auch möglich, die Gesamtmenge oder die gegebenenfalls verbliebene Restmenge an Dispergierhilfsmitteln während der Polymerisationsreaktion gemeinsam mit den Monomeren M zuzudosieren. Die Gesamtmenge oder die gegebenenfalls verbliebene Restmenge an Dispergierhilfsmitteln kann dem wässrigen Polymerisationsmedium dabei diskontinuierlich in einer oder mehreren Portionen oder kontinuierlich mit gleichbleibenden oder sich verändernden Mengenströmen zudosiert werden.

Gemäß einer bevorzugten Ausführungsform wird die Menge an Polymer A derart gewählt, dass das Mengenverhältnis von Polymer A zur Gesamtmenge an Monomeren M im Bereich von 10:90 bis 50:50 liegt, bevorzugt im Bereich von 20:80 bis 40:60 liegt.

Gemäß einer ebenfalls bevorzugten Ausführungsform wird die Menge an Polymermischung A derart gewählt, dass das Mengenverhältnis von Polymergemisch A zur Gesamtmenge an Monomeren M im Bereich von 10:90 bis 50:50 liegt, bevorzugt im Bereich von 20:80 bis 40:60 liegt.

Erfindungswesentlich ist, dass eine Monomerzusammensetzung aus

| | |
|---|---|
| 5 bis 30 Gew.-%, | eines oder mehrerer Monomere M1, ausgewählt unter Estern der Acryl-und/oder Methacrylsäure mit 2 bis 8 C-Atome aufweisenden Alkanolen |
| 70 bis 95 Gew.-% | Styrol und/oder Methylmethacrylat (M2), und |
| 0 bis 10 Gew.-% | wenigstens einer anderen ethylenisch ungesättigten Verbindung (M3), welche mit den Monomeren M1 und M2 copolymerisierbar ist, |

jeweils bezogen auf die Gesamtmenge der Monomere M, mittels radikalischer Emulsionspolymerisation zu einem Polymer P polymerisiert wird, wobei das Polymer P eine Glasübergangstemperatur $T_g$ von $\geq$ 35 und $\leq$ 150 °C, bevorzugt von $\geq$ 60 und $\leq$ 90 °C gemessen nach DIN EN ISO 11357-2 (2013-09) aufweist.

Die Durchführung von radikalisch initiierten Emulsionspolymerisationen von ethylenisch ungesättigten Verbindungen (Monomere) in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die Monomere, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise schaum- oder viskositätsmodifizierende Additive zugesetzt. Von dieser allgemeinen Verfahrensweise unterscheidet sich die Herstellung einer erfindungsgemäß eingesetzten wässrigen Dispersion des Polymeren P lediglich dadurch, dass die Monomeren M in Anwesenheit wenigstens eines Polymeren A bzw. einer Polymermischung A polymerisiert werden. Dabei ist es selbstverständlich, dass zur Herstellung der Polymere P im Rahmen der vorliegenden Schrift auch die dem Fachmann geläufigen Saat-, Stufen- und Gradientenfahrweisen mit umfasst sein sollen.

Mit Vorteil werden als Ester der Acrylsäure mit 2 bis 8 C-Atome aufweisenden Alkanolen (Monomere M1) Acrylsäureethyl-, -n-butyl-, -iso-butyl-, pentyl-, -hexyl-, -heptyl-, -octyl-, und -2-ethylhe-xylester gewählt.

Sofern es sich um Ester von Alkoholen biologischen Ursprungs handelt, ist es möglich, den "Biokohlenstoffanteil" des Polymers P zu erhöhen. Geeignete Alkohole für die Acrylsäureester (M1) sind beispielsweise Isobutanol,Isopentanol und 2-Octanol. Ein auf diese Weise erhöhter Anteil an Bio-Kohlenstoff reduziert den Anteil von Fossilen Kohlenstoff und senkt den $CO_2$-Bedarf bei der Herstellung der Polymerdispersion.

Der Begriff "Biokohlenstoff" weist darauf hin, dass der Kohlenstoff biologischen Ursprungs ist und aus einem Biomaterial/nachwachsenden Rohstoffen stammt. Ein nachwachsender Rohstoff bzw. Biomaterial ist ein organisches Material, bei dem der Kohlenstoff aus dem $CO_2$ stammt, das kürzlich (nach menschlichem Maßstab) durch Photosynthese aus der Atmosphäre fixiert wurde. Ein Biomaterial (Kohlenstoff 100% natürlichen Ursprungs) hat ein Isotopenverhältnis von $^{14}C/^{12}C$ größer als $10^{-12}$, typischerweise etwa $1,2 \times 10^{-12}$, während ein fossiles Material ein Nullverhältnis hat. Tatsächlich wird das Isotop $^{14}C$ in der Atmosphäre gebildet und dann mittels Photosynthese eingebaut, über einen Zeitraum von wenigen Jahrzehnten. Die Halbwertszeit des $^{14}C$ beträgt 5730 Jahre. So haben die aus der Photosynthese stammenden Materialien, im allgemeinen Pflanzen, notwendigerweise einen maximalen Gehalt am $^{14}C$ Isotop. Die Bestimmung des Gehalts an Biomaterial oder Biokohlenstoff kann nach den Normen ASTM D 6866-12, der Methode B (ASTM D 6866-06) und ASTM D 7026 (ASTM D 7026-04) erfolgen.

Gemäß einer bevorzugten Ausführungsform wird das Monomer M1 ausgewählt unter Ethyl-, Propyl-, n-Butyl-, i-Butyl-, Hexyl- und 2-Ethylhexylacrylat.

Monomere M2 sind erfindungsgemäß Styrol und/oder Methylmethacrylat.

Monomere M3 sind ethylenisch ungesättigten Verbindung, welche mit den Monomeren M1 und M2 copolymerisierbar sind. Als solche kommen insbesondere in einfacher Weise radikalisch polymerisierbare Monomere in Betracht, wie beispielsweise Ethylen, vinylaromatische Monomere, wie $\alpha$-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden $\alpha,\beta$-monoethylenisch ungesättigten Dicarbonsäuren, wie insbesondere Maleinsäure, Fumarsäure und Itakonsäure, mit im allgemeinen 1 bis 12, vorzugsweise 1 bis 8 und insbesondere 1 bis 4 C-Atome aufweisenden Alkanolen, wie besonders, Fumar- und Maleinsäuredimethylester oder -di-n-butylester, Nitrile $\alpha,\beta$-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien und Isopren.

Monomere M3, die das Polymer modifizieren, sind solche, die entweder wenigstens eine Säuregruppe und/oder deren entsprechendes Anion bzw. wenigstens eine Amino-, Amido-, Ureidooder N-heterocyclische Gruppe und/oder deren am Stickstoff protonierten oder alkylierten Ammoniumderivate enthalten. Beispielhaft genannt seien $\alpha,\beta$-monoethylenisch ungesättigte Monound Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-Aminoethylacrylat, 2-Aminoethylmethacrylat, 2-Aminopropylacrylat, 2-Aminopropylmethacrylat, 3-Aminopropylacrylat, 3-Aminopropylmethacrylat, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat.

Diese vorgenannten Monomeren M3 können als modifizierende Monomere enthalten sein. Sofern enthalten, werden sie in Mengen ≤ 10 Gew.-% und bevorzugt ≤ 5 Gew.-%, bezogen auf die Gesamtmonomerenmenge P, eingesetzt.

Monomere M3, die üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie 1,2-, 1,3- oder 1,4-Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie 2-Hydroxyethyl-, 2-Hydroxypropyl-, 3-Hydroxy- oder 4-Hydroxybutylacrylat und -methacrylat sowie Verbindungen, wie Diacetonacrylamid und Acetylacetoxyethylacrylat bzw. -methacrylat. Häufig werden die vorgenannten Monomeren in Mengen $\leq 5$ Gew.-%, bevorzugt jedoch in Mengen $\leq 1$ Gew.-%, jeweils bezogen auf die Gesamtmonomerenmenge P, eingesetzt.

Bevorzugt ist das Polymer P erhältlich durch radikalisch initiierte Emulsionspolymerisation einer Monomerenzusammensetzung aus

| | |
|---|---|
| 5 bis 30 Gew.-%, | eines oder mehrerer Monomere M1, ausgewählt unter Estern der Acryl- und/oder Methacrylsäure mit 2 bis 8 C-Atome aufweisenden Alkanolen, insbesondere Estern der Acrylsäure mit 2 bis 8 C-Atome aufweisenden Alkanolen, |
| 70 bis 95 Gew.-% | oder 70 bis 94,9 Gew.-% Styrol und/oder Methylmethacrylat (M2), |
| 0,1 bis 10 Gew.-% | wenigstens einer weiteren ethylenisch ungesättigten Verbindung (M3), welche mit den Monomeren M1 und M2 copolymerisierbar ist, wovon 0,1 bis 5,0 Gew.-% bezogen auf die Gesamtmonomere M Glycidylacrylat und/oder Glycidylmethacrylat ist, |

jeweils bezogen auf die Gesamtmenge der Monomere M.

Besonders bevorzugt ist das Polymer P erhältlich durch radikalisch initiierte Emulsionspolymerisation einer Monomerenzusammensetzung aus

| | |
|---|---|
| 5 bis 25 Gew.-% | Ethylacrylat, Propylacrylat, n-Butylacrylat, i-Butylacrylat, Hexylacrylat und/oder 2-Ethylhexylacrylat (M1), |
| 70 bis 94,9 Gew.-% | Styrol und/oder Methylmethacrylat (M2), |
| 0,1 bis 5,0 Gew.-% | Glycidylacrylat und/oder Glycidylmethacrylat (M3a), |
| 0 bis 5,0 Gew.-% | Acrylsäure, Methacrylsäure, 2-Hydroxyethyl-, 2-Hydroxypropyl- und/oder 3-Hydroxypropylacrylat und/oder methacrylat (M3b), |
| 0 bis 2,0 Gew.-% | 1,4-Butylenglykoldiacrylat und -methacrylat, 1,2-, 1,3- und 1,4-Divinylbenzol, Allylacrylat und/oder Allylmethacrylat (M3c) |

wobei sich die Mengen der Monomere M zu 100 Gew.-% aufsummieren.

Besonders bevorzugt ist das Polymer P erhältlich durch radikalisch initiierte Emulsionspolymerisation einer Monomerenzusammensetzung aus

| | |
|---|---|
| 5 bis 20 Gew.-% | Ethylacrylat, Propylacrylat, n-Butylacrylat, i-Butylacrylat, Hexylacrylat und/oder 2-Ethylhexylacrylat (M1), |
| 70 bis 94,9 Gew.-% | Styrol und/oder Methylmethacrylat (M2), |
| 0,1 bis 5,0 Gew.-% | Glycidylacrylat und/oder Glycidylmethacrylat (M3a), |
| 0 bis 5,0 Gew.-% | Acrylsäure, Methacrylsäure, 2-Hydroxyethyl-, 2-Hydroxypropyl- und/oder 3-Hydroxypropylacrylat und/oder 2-Hydroxyethyl-, 2-Hydroxypropyl- und/oder 3-Hydroxypropylmethacrylat (M3b), |
| 0 bis 2,0 Gew.-% | 1,4-Butylenglykoldiacrylat und -methacrylat, 1,2-, 1,3- und 1,4-Divinylbenzol, Allylacrylat und/oder Allylmethacrylat (M3c) |

wobei sich die Mengen der Monomere M zu 100 Gew.-% aufsummieren.

Die radikalisch initiierte wässrige Emulsionspolymerisation zur Herstellung der Polymeren P wird in der Regel in Gegenwart von 0,1 bis 5 Gew.-%, vorzugsweise 0,1 bis 4 Gew.-% und insbesondere 0,1 bis 3 Gew.-%, jeweils bezogen auf die Gesamtmonomerenmenge M, eines radikalischen Polymerisationsinitiators (Radikalinitiator) durchgeführt. Als Radikalinitiatoren kommen alle diejenigen in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder Di-Cumylperoxid eingesetzt werden. Als Azoverbindung finden im Wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Selbstverständlich können auch sogenannte Redoxinitiatorensysteme als Radikalinitiatoren eingesetzt werden. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kaliumund/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kaliumund/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Neben der saatfreien Herstellungsweise kann zur Einstellung der Polymerteilchengröße die Emulsionspolymerisation zur Herstellung der Polymeren P nach dem Saatlatex-Verfahren oder in Gegenwart eines in situ hergestellten Saatlatex erfolgen. Verfahren hierzu sind dem Fachmann bekannt und können dem Stand der Technik entnommen werden (siehe beispielsweise EP-B 40 419, EP-A 567 812, EP-A 614 922 sowie 'Encyclopedia of Polymer Science and Technology', Vol. 5, Seite 847, John Wiley & Sons Inc., New York, 1966). So empfiehlt der Stand der Technik, beim semikontinuierlichen Zulaufverfahren eine definierte feinteilige Saat-Polymerdispersion im wässrigen Polymerisationsmedium vorzulegen und dann die Monomere M in Gegenwart des Saatlatex zu polymerisieren. Hierbei wirken die Saat-Polymerteilchen als 'Polymerisationskeime' und entkoppeln die Polymerteilchenbildung und das Polymerteilchenwachstum. Während der Emulsionspolymerisation kann prinzipiell weiterer Saatlatex direkt dem wässrigen Polymerisationsmedium zugegeben werden. Hierdurch werden breite Größenverteilungen der Polymerteilchen erreicht, die insbesondere bei Polymerdispersionen mit hohem Feststoffgehalt oftmals erwünscht sind (vgl. hierzu beispielsweise DE-A 4213965). Anstelle der Zugabe einer definierten Saatlatex kann dieser auch in situ erzeugt werden. Hierzu wird beispielsweise eine Teilmenge der zur Polymerisation eingesetzten Monomeren M und des Radikalinitiators zusammen mit einer Teil- oder der Gesamtmenge des Polymeren A sowie gegebenenfalls zusätzlichen Dispergierhilfsmitteln vorgelegt und auf Reaktionstemperatur erwärmt, wobei eine relativ feinteilige Polymersaat entsteht. Anschließend wird im gleichen wässrigen Polymerisationsmedium die eigentliche Polymerisation nach dem Zulaufverfahren durchgeführt (siehe auch DE-A 4213965).

Vorteilhaft erfolgt die Herstellung der Polymeren P durch radikalisch initiierten wässrigen Emulsionspolymerisation bei einer Reaktionstemperatur im Bereich von 0 bis 170 °C, wobei jedoch Temperaturen von 70 bis 120 °C und insbesondere 80 bis 100 °C besonders bevorzugt sind. Die radikalische wässrige Emulsionspolymerisation kann bei einem Druck kleiner, gleich oder größer 1 atm (absolut) durchgeführt werden. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar (Überdruck) oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Emulsionspolymerisation der Monomeren bei 1 atm (= Atmosphärendruck = 1,013 bar absolut) oder unter erhöhtem Druck unter Inertgasatmosphäre, wie beispielsweise unter Stickstoff oder Argon durchgeführt.

Bei der radikalisch initiierten wässrigen Emulsionspolymerisation kann das wässrige Polymerisationsmedium prinzipiell auch in untergeordneten Mengen (< 5 Gew.-%) wasserlösliche organische Lösungsmittel, wie beispielsweise Methanol, Ethanol, Isopropanol, Butanole, Pentanole, aber auch Aceton etc. umfassen. Bevorzugt erfolgt die radikalisch initiierte wässrige Emulsionspolymerisation jedoch in Abwesenheit solcher Lösungsmittel.

Die erfindungsgemäß eingesetzten Polymere P weisen eine Glasübergangstemperatur $T_g \geq 35\,°C$ und $\leq 150\,°C$ gemessen nach DIN EN ISO 11357-2 (2013-09) auf. Mit Vorteil liegt die Glasübergangstemperatur der Polymeren P im Bereich $\geq 40$ und $\leq 110\,°C$ und mit besonderem Vorteil im Bereich $\geq 60$ und $\leq 90\,°C$.

Von Bedeutung ist ferner, dass nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) die Glasübergangstemperatur von höchstens schwach vernetzten Mischpolymerisaten in guter Näherung nach der folgenden Gleichung abgeschätzt werden kann

$$1/Tg = x_1/Tg^1 + x_2/Tg^2 + \ldots x_n/Tg^n,$$

wobei $x_1$, $x_2$, …. $x_n$ die Massenbrüche der Monomeren 1, 2, …. n und $Tg^1$, $Tg^2$, …. $Tg^n$ die Glasübergangstemperaturen der jeweils nur aus einem der Monomeren 1, 2, …. n aufgebauten Homopolymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in Brandrup, J.; Immergut, E.H.; Grulke, E.A.; Abe, A.; Bloch, D.R.: Polymer Handbook, 4th Edition, Wiley-VCH 2003, sowie in Penzel, E., Ballard, N. and Asua, J.M. (2021). Polyacrylates. In Ullmann's Encyclopedia of Industrial Chemistry, aufgeführt.

Die durch Emulsionspolymerisation zugänglichen wässrigen Dispersionen des Polymeren P weisen üblicherweise einen Feststoffgehalt von ≥ 30 und ≤ 70 Gew.-%, häufig ≥ 40 und ≤ 68 Gew.-% und oft ≥ 45 und ≤ 65 Gew.-%, jeweils bezogen auf die wässrige Polymerisatdispersion, auf.

Mit besonderem Vorteil liegen die Polymeren P in Form von Teilchen mit einem mittleren Teilchendurchmesser ≥ 10 und ≤ 1000 nm, vorteilhaft ≥ 30 und ≤ 600 nm und besonders vorteilhaft ≥ 100 bis ≤ 500 nm, bestimmt nach der Methode der quasielastische Lichtstreuung (ISO-Norm 13 321; cumulant z-average), vor.

Bei der Herstellung des Polymer/Faser-Komposits werden vorteilhaft ≥ 1 und ≤ 50 g und mit besonderem Vorteil ≥ 5 und ≤ 25 g an Polymerdispersion P (fest) (gerechnet als Summe von Polymeren A bzw. Polymermischung A und der Gesamtmenge an Monomeren M), bezogen auf 100 g an faserförmigen Substrat eingesetzt.

Zur Erhöhung der Festigkeit des Komposits ohne jedoch die Thermoverformbarkeit einzubüßen ist es gemäß einer bevorzugten Ausführungsform möglich, dass die Dispersion von Polymer P ≤3 Gew.-%, vorzugsweise 0,1 bis 3 Gew.-%, eines wenigsten 2 Hydroxylgruppen aufweisenden Amins bezogen auf Polymerdispersion P (fest) enthält.

Geeignete wenigstens zwei Hydroxylgruppen aufweisende Amine sind sekundäre oder tertiäre Alkylamine mit $C_1$-$C_{20}$-Alkylresten, die gegebenenfalls ungesättigt und/oder durch Oxi-Gruppen unterbrochen sein können. Die Amine weisen dabei zwei, drei oder vier Hydroxylgruppen auf.

Vorteilhaft geeignet sind β-Hydroxyalkylamine der allgemeinen Formel

$$R^1\text{-N-}R^2(R^3),$$

in der

R$^1$ für ein H-Atom, eine $C_1$- bis $C_{10}$-Akylgruppe, eine $C_1$-$C_{10}$-Hydroxlalkylgruppe, die durch Ethylenoxid- und/oder Propylenoxideinheiten unterbrochen sein kann, und
R$^2$ und R$^3$ unabhängig voneinander für eine $C_1$-$C_{10}$-Hydroxyalkylgruppe stehen.

Besonders bevorzugt sind Diethanolamin, Triethanolamin, Diisopropanolamin, Triisopropanolamin, insbesondere Triethanolamin.

Gemäß einer weiteren bevorzugten Ausführungsform enthält die wässrige Polymerdispersion P kein Triethanolamin, insbesondere kein wenigstens 2 Hydroxylgruppen aufweisendes Amin.

Nach dem erfindungsgemäßen Verfahren sind insbesondere Polymer/Faser-Komposite zugänglich, deren Flächengewicht ≥ 1000 und ≤ 30000 g/m$^2$, insbesondere vorteilhaft ≥ 1000 und ≤ 20000 g/m$^2$ und mit Vorteil ≥ 1000 und ≤ 10000 g/m$^2$ aufweisen. Dabei sind die nach dem erfindungsgemäßen Verfahren erhältlichen Polymer/Faser-Komposite in einer bevorzugten Ausführungsform flächenförmig während sie in einer weiteren bevorzugten Ausführungsform eine nicht-flächenförmige dreidimensionale Struktur aufweisen.

Erfindungsgemäß umfasst sind auch die Polymer/Faser-Komposite, wie sie nach dem erfindungsgemäßen Verfahren erhältlich sind.

In entsprechender Weise ist auch die Verwendung eines erfindungsgemäßen Polymer/Faser-Komposits zur Herstellung eines Polymer/Faser-Formteils erfindungsgemäß umfasst, welches sich in seiner Form vom eingesetzten Polymer/Faser-Komposit unterscheidet.

Dementsprechend ist erfindungsgemäß auch ein Verfahren zur Herstellung eines Polymer/Faser-Formteils umfasst, welches dadurch gekennzeichnet ist, dass das erfindungsgemäße Polymer/Faser-Komposit auf eine Temperatur ≥ der Glasübergangstemperatur $T_g$ des Polymer P aufgeheizt wird und bei einer Temperatur ≥ der Glasübergangstemperatur $T_g$ des Polymer P in die gewünschte Form des Polymer/Faser-Formteils gebracht wird und danach das erhaltene Polymer/Faser-Formteil unter Beibehaltung seiner Form auf eine Temperatur < der Glasübergangstemperatur $T_g$ des Polymer P abgekühlt wird.

Erfindungsgemäß erfolgt das Aufheizen des Polymer/Faser-Komposits auf eine Temperatur, welche wenigstens der Glasübergangstemperatur $T_g$ des Polymeren P entspricht. Mit Vorteil wird das Polymer/Faser-Komposit auf eine Temperatur $T_g$ + ≥ 10 K und mit besonderem Vorteil $T_g$ + ≥ 30 K aufgeheizt, also eine Temperatur die mindestens 10 vorzugsweise 30 Kelvin oberhalb der Glasübergangstemperatur des Polymers P liegt.

Von Bedeutung ist ferner, dass die Herstellung des Polymer/Faser-Formteils in einer Ausführungsform mittels einer beheizten Formpresse erfolgt, deren Kontaktfläche eine Temperatur $\geq T_g$ aufweist und deren Form der negativen Form des Polymer/Faser-Formteils entspricht und dessen Abkühlung außerhalb der Formpresse erfolgt. Aufheizvorgang und Verformungsvorgang erfolgen in dieser Ausführungsform in der beheizten Formpresse. Selbstverständlich ist es erfindungsgemäß auch möglich, dass das Polymer/Faser-Komposit außerhalb der Formpresse auf eine Temperatur $\geq T_g$ aufgeheizt und anschließend in der Formpresse ohne weitere Heizung zu den Polymer/Faser-Formteil verformt wird. In dieser Ausführungsform erfolgt der Aufheiz- und der Verformungsvorgang separat.

In einer vorteilhaften Ausführungsform erfolgt das erfindungsgemäße Verfahren dergestalt, dass vor oder nach dem Aufheizvorgang aber vor dem Verformungsschritt noch ein Verfahrenszwischenschritt durchgeführt wird, in welchem auf die eine und/oder die andere Oberfläche des Polymer/Faser-Komposits ein flächenförmiges Dekormaterial aufgebracht wird.

Beim dem erfindungsgemäß einsetzbaren Dekormaterial handelt es sich vorteilhaft um ein textiles Flächengebilde, wie beispielsweise ein Vliesstoff, ein Gewebe oder ein Gewirke aus natürlichen oder synthetischen Fasern, eine Kunststofffolie, wie beispielsweise eine thermoplastische Polyvinylchlorid-, Polyolefin- oder Polyesterfolie, ein geschäumtes Flächengebilde, wie beispielsweise ein Flächengebilde aus einem Polyolefin- oder einem Polyurethanschaum, ein geschäumtes Flächengebilde, welches seinerseits auf der nicht mit dem aufgeheizten Polymer/Faser-Komposit in Kontakt kommenden Oberfläche mit einem textilen Flächengebilde, einer Kunststofffolie oder einem weiteren geschäumten Flächengebilde beschichtet (kaschiert) ist oder um ein Holzfunier.

Das flächenförmige Dekormaterial weist in der Regel eine Dicke $\leq 10$ mm auf. Handelt es sich bei dem flächenförmigen Dekormaterial um ein textiles Flächengebilde oder eine Kunststofffolie, so beträgt deren Dicke in der Regel $\leq 3$ mm, häufig vorteilhaft $\leq 2$ mm und häufig insbesondere vorteilhaft $\leq 1$ mm. Handelt es sich jedoch bei dem flächenförmigen Dekormaterial um ein geschäumtes Flächengebilde oder ein beschichtetes (kaschiertes) geschäumtes Flächengebilde, so beträgt deren Dicke häufig $\leq 8$ mm, oft $\leq 5$ mm und besonders oft $\leq 3$ mm. Handelt es sich bei dem flächenförmigen Dekormaterial jedoch um ein Holzfunier, so beträgt dessen Dicke in der Regel $\leq 3$ mm, häufig vorteilhaft $\leq 2$ mm und häufig insbesondere vorteilhaft $\leq 1$ mm.

Erfindungsgemäß sind daher auch die nach vorgenanntem Verfahren zugänglichen Polymer/Faser-Formteile umfasst.

Erfindungsgemäß ist ferner von Bedeutung, dass sowohl das Verfahren zur Herstellung des Polymer/Faser-Komposits, wie auch das Verfahren zur Herstellung des Polymer/Faser-Formteils kontinuierlich oder diskontinuierlich erfolgen können.

Die erfindungsgemäß zugänglichen Polymer/Faser-Formteile weisen eine gute Thermodimensionsstabilität auf und eigenen sich daher vorteilhaft als Bauelement im Fahrzeugbau, wie beispielsweise als Türinsert, Türdekorträger, Kniefänger, Handschuhfach, Hutablage, Sonnenblende, Mittelkonsole, Kofferraumverkleidung oder Sitzrückenverkleidung, in Bauwerken, wie beispielsweise als Raumteiler, Trennwand, Deckenplatte oder Wanddekorteil und in Möbeln als Möbelformteil, wie beispielsweise als Sitz- oder Rückenfläche, wobei die Verwendung als Wanddekorteil, Möbelformteil oder Interieurbauteil im Fahrzeugbau besonders bevorzugt sind.

Weiterhin weisen die erfindungsgemäßen Polymer/Faser-Formteile eine gute Formbeständigkeit in Feuchtklima auf. Sie eignen sich daher vorteilhaft für Bad- oder Küchenmöbel oder Möbel im Allgemeinen, die einer höheren Wasserdampfbelastung ausgesetzt sind, wie z.B. in Klimazonen mit hoher Luftfeuchtigkeit.

Die Erfindung soll durch nachfolgende nichteinschränkende Beispiele erläutert werden.

Beispiele

Messmethoden:

Der Feststoffgehalt wurde generell mit einem Feuchtebestimmer der Firma Mettler Toledo durch Trocknung von 0,5 bis 1 g einer erhaltenen Polymerisatdispersion oder Polymerisatlösung bei 140 °C bis zur Gewichtskonstanz bestimmt.

Die Glasübergangstemperatur des Polymer P wurde generell mit Hilfe eines Differentialkalorimeters Q 2000 der Firma TA Instruments bestimmt. Die Heizrate betrug 10 K pro Minute.

Die zahlenmittlere Teilchengröße der Dispersionsteilchen wurde generell durch dynamische Lichtstreuung an einer 0,005 bis 0,01 gew.-%igen wässrigen Dispersion bei 23 °C mittels des Autosizers IIC der Firma Malvern Instruments, England, ermittelt. Angegeben wird der mittlere Durchmesser der Kumulantenauswertung (cumulant z-average) der gemessenen Autokorrelationsfunktion (ISO-Norm 13321).

Die pH-Werte wurden generell durch Messung einer Probe mit einer pH-Elektrode der Firma Schott bei Raumtemperatur bestimmt.

Die Viskosität wurde nach dem Brookfield-Verfahren (ISO 2555, 1989) bei 23 °C bestimmt.

Die Molekulargewichtsbestimmung der Polymerlösungen A1, A2 und A3 erfolgte gelpermeationschromatographisch über ein Polyacrylsäure-Natriumsalz als Standard unter Verwendung von zwei in Reihe geschalteten TSKgel G 3000 PWXL-Säulen der Firma Tosoh bei einer Temperatur von 35 °C, einem Elutionsmittel (entionisiertes Wasser mit 0,01 mol/l Phosphatpuffer pH-Wert 7,4 und 0,01 mol/l NaN3), einer Durchflußgeschwindigkeit von 0,5 ml pro Minute, einer Injektionsmenge von 100 $\mu$l, einer Konzentration der injizierten Lösung von 1 bis 2 mg pro ml sowie einem DRI-Detektor der Firma Agilent Technologies GmbH.

Eingesetzte Stoffe:

| | |
|---|---|
| Polymerlösung A1: | 50 gew.-%ige wässrige Lösung eines Acrylsäure/Maleinsäure-Copolymerisats (Gewichtsverhältnis Acrylsäure/Maleinsäure im Polymer 50:50) mit einem gewichtsgemittelten Molekulargewicht von 3.000 g/mol |
| Polymerlösung A2: | 44 gew.-%ige wässrige Lösung eines Acrylsäure/Maleinsäure Copolymerisats (Gewichtsverhältnis Acrylsäure/Maleinsäure im Polymer 70:30) mit einem gewichtsgemittelten Molekulargewicht von 10.000 g/mol |
| Polymerlösung A3: | 49 gew.-%ige wässrige Lösung eines Acrylsäure-Homopolymerisats mit einem gewichtsgemittelten Molekulargewicht von 5.000 g/mol |

Beispiel 1: Herstellung einer wässrigen Polymer P-Dispersion in Anwesenheit einer Polymermischung A (Dispersion D1)

In einem 4 L-Glasgefäß mit Ankerrührer, Rückflusskühler und Dosiereinrichtung wurden bei 23 °C 378 g entionisiertes Wasser, 792 g der Polymerlösung A1, sowie 150 g der Polymerlösung A2 und 18,6 g Triethanolamin vorgelegt. Die Polymermischung A (Polymer A1 + Polymer A2) ist somit aus den Monomeren A1 /A2 im Gewichtsverhältnis 54/46 (Acrylsäure/Maleinsäure) aufgebaut.

Zu dieser Mischung wurden anschließend 66 g einer 25 gew.-%igen wässrigen Natriumhydroxid-Lösung über einen Tropftrichter zugetropft und die Mischung unter Stickstoffatmosphäre bei Atmosphärendruck (1,013 bar absolut) auf 94 °C aufgeheizt. Nach Erreichen der Temperatur wurden innerhalb einer Minute 10 Gew.-Teile von Zulauf 1 unter Rühren zudosiert. Anschließend wurden, gleichzeitig beginnend und unter Aufrechthaltung einer Polymerisationstemperatur von 93 °C, der Rest von Zulauf 1 sowie die Gesamtmenge von Zulauf 2 zudosiert. Zulauf 1 wurde innerhalb von 165 Minuten und Zulauf 2 innerhalb von 150 Minuten kontinuierlich mit gleichbleibendem Mengenstrom zudosiert.

| | | |
|---|---|---|
| Zulauf 1: | 220 g | einer 7 gew.-%igen wässrigen Lösung aus Natriumperoxodisulfat. |
| Zulauf 2: | homogenen Emulsion aus | |
| | 298 g | entionisiertem Wasser, |
| | 27,5 g | einer 28 gew.-%igen wässrigen Lösung von Natriumlaurylethersulfat (Disponil® FES 27; Produkt der Fa. BASF SE), |
| | 22 g | einer 15 gew.-%igen wässrigen Lösung von Natriumdodecylsulfat (Disponil® SDS 15; Produkt der Fa. BASF SE), |
| | 132 g | n-Butylacrylat, |
| | 233 g | Methylmethacrylat, |
| | 702 g | Styrol und |
| | 33 g | Glycidylmethacrylat. |

Nach beendeter Zugabe von Zulauf 1 wurde noch 5 Minuten weiter gerührt und dabei auf 90 °C abgekühlt. Anschließend wurden weitere 45 Minuten bei 90 °C gerührt. Danach wurde das Polymerisationsgemisch auf Raumtemperatur abgekühlt und durch Zutropfen von 32 g einer 25 gew.-%igen wässrigen Natriumhydroxid-Lösung auf pH 2,8 gestellt.

Nach der Filtration über einen 125 $\mu$m-Filter wies die erhaltene wässrige Polymerdispersion einen Feststoffgehalt von 53,0 Gew.-% und eine Viskosität von 84 mPas auf. Die zahlenmittlere Teilchengröße wurde zu 317 nm und die Glasübergangstemperatur des Emulsionspolymerisats zu 79 °C bestimmt.

Beispiel 2: Herstellung einer wässrigen Polymer P-Dispersion in Anwesenheit einer Polymermischung A (Dispersion D2)

In einem 4 L-Glasgefäß mit Ankerrührer, Rückflusskühler und Dosiereinrichtung wurden bei 23 °C 322 g entionisiertes Wasser, 792 g der Polymerlösung A1, sowie 198 g der Polymerlösung A2 vorgelegt.

Zu dieser Polymermischung A wurden anschließend 100 g einer 25 gew.-%igen wässrigen Natriumhydroxid-Lösung über einen Tropftrichter zugetropft und die Mischung unter Stickstoffatmosphäre bei Atmosphärendruck (1,013 bar absolut) auf 94 °C aufgeheizt. Es wurde wie in Beispiel 1 weitergearbeitet mit denselben Zulaufzusammensetzungen wie auch -mengen.

Nach der Filtration über einen 125 $\mu$m-Filter wies die erhaltene wässrige Polymerdispersion einen Feststoffgehalt von 53,0 % und eine Viskosität von 106 mPas auf. Die zahlenmittlere Teilchengröße wurde zu 325 nm und die Glasübergangstemperatur des Emulsionspolymerisats zu 78 °C bestimmt.

Beispiel 3: Herstellung einer wässrigen Polymer P-Dispersion in Anwesenheit des Polymers A1 (Dispersion D3)

In einem 4 L-Glasgefäß mit Ankerrührer, Rückflusskühler und Dosiereinrichtung wurden bei 23 °C 319 g entionisiertes Wasser und 595 g der Polymerlösung A1 vorgelegt.

Zu dieser Mischung wurden anschließend 110 g einer 25 gew.-%igen wässrigen Natriumhydroxid-Lösung über einen Tropftrichter zugetropft und die Mischung unter Stickstoffatmosphäre bei Atmosphärendruck (1,013 bar absolut) auf 94 °C aufgeheizt. Nach Erreichen der Temperatur wurden innerhalb einer Minute 10 Gew.-Teile von Zulauf 1 unter Rühren zudosiert. Anschließend wurden, gleichzeitig beginnend und unter Aufrechthaltung einer Polymerisationstemperatur von 93 °C, der Rest von Zulauf 1 sowie die Gesamtmenge von Zulauf 2 zudosiert. Zulauf 1 wurde innerhalb von 165 Minuten und Zulauf 2 innerhalb von 150 Minuten kontinuierlich mit gleichbleibendem Mengenstrom zudosiert.

| | | |
|---|---|---|
| Zulauf 1: | 180 g | einer 7 gew.-%igen wässrigen Lösung aus Natriumperoxodisulfat. |
| Zulauf 2: | homogenen Emulsion aus | |
| | 267 g | entionisiertem Wasser, |
| | 21,4 g | einer 28 gew.-%igen wässrigen Lösung von Natriumlaurylethersulfat (Disponil® FES 27; Produkt der Fa. BASF SE), |
| | 16 g | einer 15 gew.-%igen wässrigen Lösung von Natriumdodecylsulfat (Disponil SDS 15; Produkt der Fa. BASF SE), |
| | 108 g | n-Butylacrylat, |
| | 199 g | Methylmethacrylat und |
| | 596 g | Styrol |

Nach beendeter Zugabe von Zulauf 1 wurde noch 5 Minuten weiter gerührt und dabei auf 90 °C abgekühlt. Anschließend wurde weitere 45 Minuten bei 90 °C gerührt. Danach wurde das Polymerisationsgemisch auf Raumtemperatur abgekühlt und durch Zutropfen von 32 g einer 25 gew.-%igen wässrigen Natriumhydroxid-Lösung auf pH 2,8 gestellt.

Nach der Filtration über einen 125 $\mu$m-Filter wies die erhaltene wässrige Polymerdispersion einen Feststoffgehalt von 52,5 % und eine Viskosität von 70 mPas auf. Die zahlenmittlere Teilchengröße wurde zu 325 nm und die Glasübergangstemperatur des Emulsionspolymerisats zu 80 °C bestimmt.

Beispiel 4: Herstellung einer wässrigen Polymer P-Dispersion in Anwesenheit des Polymers A3 (Vergleichsdispersion V1 - nicht erfindungsgemäß)

In einem 4 L-Glasgefäß mit Ankerrührer, Rückflusskühler und Dosiereinrichtung wurden bei 23 °C 433 g entionisiertes Wasser und 941 g der Polymerlösung A3 vorgelegt.

Zu dieser Mischung wurden anschließend 96 g einer 25 gew.-%igen wässrigen Natriumhydroxid-Lösung über einen Tropftrichter zugetropft und die Mischung unter Stickstoffatmosphäre bei Atmosphärendruck (1,013 bar absolut) auf 94 °C aufgeheizt. Nach Erreichen der Temperatur wurden innerhalb einer Minute 10 Gew.-Teile von Zulauf 1 unter Rühren zudosiert. Anschließend wurden, gleichzeitig beginnend und unter Aufrechthaltung einer Polymerisationstemperatur von 93 °C, der Rest von Zulauf 1 sowie die Gesamtmenge von Zulauf 2 zudosiert. Zulauf 1 wurde innerhalb von 165 Minuten und Zulauf 2 innerhalb von 150 Minuten kontinuierlich mit gleichbleibendem Mengenstrom zudosiert.

| Zulauf 1: | 160 g einer 7 gew.-%igen wässrigen Lösung aus Natriumperoxodisulfat. |
| Zulauf 2: | homogenen Emulsion aus |
| 292 g | entionisiertem Wasser, |
| 28,6 g | einer 28 gew.-%igen wässrigen Lösung von Natriumlaurylethersulfat (Disponil® FES 27; Produkt der Fa. BASF SE), |
| 21,3 g | einer 15 gew.-%igen wässrigen Lösung von Natriumdodecylsulfat (Disponil® SDS 15; Produkt der Fa. BASF SE), |
| 80 g | n-Butylacrylat, |
| 763 g | Methylmethacrylat und |
| 277 g | Styrol |

Nach beendeter Zugabe von Zulauf 1 wurde noch 5 Minuten weiter gerührt und dabei auf 90 °C abgekühlt. Anschließend wurde das Polymerisationsgemisch weitere 45 Minuten bei 90 °C gerührt und danach auf Raumtemperatur abgekühlt.

Nach der Filtration über einen 125 μm-Filter wies die erhaltene wässrige Polymerdispersion einen Feststoffgehalt von 51,9 %, einen pH von 3,5 und eine Viskosität von 120 mPas auf. Die zahlenmittlere Teilchengröße wurde zu 446 nm und die Glasübergangstemperatur des Emulsionspolymerisats zu 92 °C bestimmt.

Beispiel 5: Herstellung einer wässrigen Polymer P-Dispersion in Anwesenheit des Polymers A3 (Vergleichsdispersion V2 - nicht erfindungsgemäß)

In einem 4 L-Glasgefäß mit Ankerrührer, Rückflusskühler und Dosiereinrichtung wurden bei 23 °C 408 g entionisiertes Wasser und 1041 g der Polymerlösung A3 vorgelegt.

Zu dieser Mischung wurden anschließend 102 g einer 25 gew.-%igen wässrigen Natriumhydroxid-Lösung über einen Tropftrichter zugetropft und die Mischung unter Stickstoffatmosphäre bei Atmosphärendruck (1,013 bar absolut) auf 94 °C aufgeheizt. Nach Erreichen der Temperatur wurden innerhalb einer Minute 10 Gew.-Teile von Zulauf 1 unter Rühren zudosiert. Anschließend wurden, gleichzeitig beginnend und unter Aufrechthaltung einer Polymerisationstemperatur von 93 °C, der Rest von Zulauf 1 sowie die Gesamtmenge von Zulauf 2 zudosiert. Zulauf 1 wurde innerhalb von 165 Minuten und Zulauf 2 innerhalb von 150 Minuten kontinuierlich mit gleichbleibendem Mengenstrom zudosiert.

| Zulauf 1: | 170 g einer 7 gew.-%igen wässrigen Lösung aus Natriumperoxodisulfat. |
| Zulauf 2: | homogenen Emulsion aus |
| 329 g | entionisiertem Wasser, |
| 30,4 g | einer 28 gew.-%igen wässrigen Lösung von Natriumlaurylethersulfat (Disponil ® FES 27; Produkt der Fa. BASF SE), |
| 22,7 g | einer 15 gew.-%igen wässrigen Lösung von Natriumdodecylsulfat (Disponil ® SDS 15; Produkt der Fa. BASF SE), |
| 85 g | n-Butylacrylat, |
| 621 g | Methylmethacrylat und |
| 415 g | Styrol |

Nach beendeter Zugabe von Zulauf 1 wurde noch 5 Minuten weiter gerührt und dabei auf 90 °C abgekühlt. Anschließend wurde das Polymerisationsgemisch weitere 45 Minuten bei 90 °C gerührt und danach auf Raumtemperatur abgekühlt.

Nach der Filtration über einen 125 μm-Filter wies die erhaltene wässrige Polymerdispersion einen Feststoffgehalt von 52,3 %, einen pH von 3,5 und eine Viskosität von 134 mPas auf. Die zahlenmittlere Teilchengröße wurde zu 352 nm und die Glasübergangstemperatur des Emulsionspolymerisats zu 86 °C bestimmt.

Beispiel 6

Weiterhin wurde die Dispersion des Beispiels 3 der WO 01/27163 nachgestellt (Vergleichsdispersion V3 - nicht erfindungsgemäß).

Allgemeine Vorschrift zur Herstellung von Faserplatten (Polymer/Faser-Komposit)

Die Versuche wurden mit einem 12 Zoll-Refiner der Firma Antriz und einer damit verbundenen Blowline durchgeführt. Dabei wurde der Refiner bei 160 bis 170 °C und einem Innendruck von 5 bis 6 bar (Überdruck) betrieben. Der Abstand zwischen den beiden Mahlplatten betrug 0,3 mm, wobei eine der Mahlplatten mit 3000 Umdrehungen pro Minute betrieben wurde. Die mit dem Refiner über einen Flunsch verbundene Blowline (Stahlrohr) wies einen Innendurchmesser von 3 cm und eine Rohrlänge von 30 m auf. Über eine 0,2 mm Düse, welche in einem Abstand von 50 cm vom Refinerausgang / Blowlineeingang in der Blowlinewand eingelassen war, wurden dann die wässrigen Bindemittel mit 2 bar (Überdruck) in die Blowline eingedüst. Am Ende der Blowline befand sich ein Zyklonabscheider, über den die beschichteten Holzfasern weiter getrocknet, auf eine Temperatur von ca. 80 °C abgekühlt und in einen offenen Behälter abgeschieden wurden.

Für die Untersuchungen wurden mit 160 bis 170 °C heißem Wasser/Dampf bei 5 bis 6 bar Überdruck in einem Kocher vorbehandelte Fichte-Hackschnitzel eingesetzt, wobei der Massenstrom an Holzschnitzel in den Refiner (bzw. Holzfasern in die Blowline) auf 30 kg pro Stunde eingestellt wurde.

Als Bindemittel wurden die Dispersionen D1, D2 und D3 sowie die Vergleichsdispersionen V1, V2 sowie V3 eingesetzt. Dabei wurden die Bindemittel mittels einer Exzenterschneckenpumpe mit einem Druck von 2 bar (Überdruck) über die 0,2 mm Düse in die Blowline eingedüst, wobei die Massenströme auf jeweils 4,8 kg Bindemittel (als Feststoff gerechnet) pro Stunde einjustiert wurden. Für jedes Bindemittel erfolgte ein Versuch über 2 Stunden im kontinuierlich stationären Zustand, wobei die während dieser Zeit mit dem jeweiligen Bindemittel besprühten Holzfasern in dem offenen Behälter gesammelt wurden. Der Anteil vom Polymer P (fest) bezogen auf die Fasern beträgt 15 Gew.-%.

Mit den aus der Blowline gemäß der vorgenannten Versuchsdurchführung erhaltenen "beleimten" Fasern wurden jeweils 2 Halbzeuge mit 8,5 mm Dicke und 22x22 cm-Länge x Breite mit einer Ziel-Dichte von 0,65 g/cm$^3$ hergestellt. Hierzu wurden 268 g der erhaltenen Fasern (Restfeuchte ca 8 Gew.-% bezogen auf trockene Fasern, mittlere Faserlänge ca. 2 mm, mittlere Faserdicke ca. 0,4 mm) gleichmäßig in einen waagrecht stehenden Holzrahmen mit den Innenmaßen 22x22x30 cm (L/B/H) eingestreut. Daran anschließend wurde auf den im Holzrahmen befindlichen Faserflor waagrecht eine 22x22 cm-Holzplatte gelegt und dieser mit einem mittigen Stempel auf eine Höhe von 5 cm vorverdichtet. Der so erhaltene Faserkuchen wurde anschließend aus dem Holzrahmen genommen, auf beiden quadratischen Flächen mit einem Trennpapier abgedeckt und bei 180 °C unter Druck mit einem Presszeitfaktor von 12 Sekunden pro Millimeter Kompositdicke auf eine Dicke von 8,5 mm verdichtet. Daran anschließend ließ man die erhaltenen Faserplatten außerhalb der Druckpresse auf Raumtemperatur abkühlen. Diese Faserplatten (Polymer/Faser-Komposit) dienen als Halbzeuge für eine nachfolgende Verdichtung bei 140 °C bzw. 180 °C mit einem Presszeitfaktor von 12 Sekunden pro Millimeter Formkörperdicke um eine nachgeschaltete Verformung zu simulieren und an den so erhaltenen "Formkörpern" die Wasserbeständigkeit und andere Kenngrößen zu prüfen.

Die so erhaltenen Formkörper werden abhängig vom verwendeten Bindemittel FPD1 (Faserplatte mit Dispersion D1), FPD2 (Faserplatte mit Dispersion D2), FPD3 (Faserplatte mit Dispersion D3), FPV1 (Faserplatte mit Vergleichsdispersion V1), FPV2 (Faserplatte mit Vergleichsdispersion V2) sowie FPV3 genannt.

Anwendungstechnische Untersuchung

Bestimmung der Wasserbeständigkeit und mechanischen Kennwerte:
Die erhaltenen Halbzeuge werden nach 24 Stunden Lagerung im Normklima einer weiteren Verdichtung (entsprechend einer Umformung) bei 140 °C sowie bei 180 °C unterworfen. Dabei werden die Halbzeuge mit einer Dichte von 0,65 g/cm$^3$ auf eine Dichte von 0,90 g/cm$^3$ nachverdichtet.

Die erhaltenen Faserplatten (Formkörper) (15 gew.-% Polymeranteil bezogen auf die Faserplatte) werden 24 Stunden im Normklima bei 20 °C/65 % relative Feuchte gelagert und anschließend geprüft. Zur Bestimmung der Wasseraufnahme und Dickenquellung werden 5x5 cm große Probekörper zugeschnitten und die Dicken der Platten nach DIN EN 325 mit einem Messgerät in der Mitte der quadratischen Probefläche auf eine Genauigkeit von 0,01 mm bestimmt. Die Dichte der Platten wird über das Verhältnis der Masse der Faserplatten zu ihrem Volumen bestimmt, das wiederum aus Länge, Breite und Dicke der Faserplatten ermittelt werden kann. Die Wasseraufnahme der Holzfaserplatte wird als relative Gewichtszunahme und die Dickenquellung als relative Zunahme der Dicke von 5x5 cm großen Probenkörper nach 24 h Lagerung in entmineralisiertem Wasser nach DIN EN 317 bestimmt. Das Biege-Elastizitätsmodul und die Biegefestigkeit bei 23 °C wird mittels Dreipunkt-Biegeversuch nach DIN EN 310 gemessen.

Tabelle 1:

| Ergebnisse der Prüfungen der Formkörper aus beleimten Holzfasern mit den Bindern aus D1, D2, D3, V1, V2 und V3 bei 140 °C verpresst | | | | | | |
|---|---|---|---|---|---|---|
| Formkörper | FPD1 | FPD2 | FPD3 | FPV1 | FPV2 | FPV3 |
| Binder | D1 | D2 | D3 | V1 | V2 | V3 |
| Plattendicke [mm] | 6,00 | 6,20 | 6,03 | 5,98 | 6,00 | 6,10 |
| Dichte [g/cm$^3$] | 0,85 | 0,86 | 0,83 | 0,85 | 0,82 | 0,83 |
| Wasseraufnahme nach 2 Std. [%] | 29 | 27 | 31 | 29 | 18 | 21 |
| Standardabweichung | 2 | 2 | 2 | 2 | 1 | 1 |
| Wasseraufnahme nach 24 Std. [%] | 124 | 112 | 130 | 145 | 152 | 240 |
| Standardabweichung [%] | 5 | 4 | 6 | 9 | 11 | 15 |
| Dickenquellung nach 2 Std. [%] | 16 | 17 | 15 | 16 | 10 | 9 |
| Standardabweichung [%] | 1 | 1 | 1 | 1 | 0 | 1 |
| Dickenquellung nach 24 Std. [%] | 54 | 55 | 58 | 124 | 135 | 187 |
| Formkörper | FPD1 | FPD2 | FPD3 | FPV1 | FPV2 | FPV3 |
| Standardabweichung [%] | 3 | 2 | 3 | 10 | 12 | 17 |
| Biege E - Modul ISO 178 [N/mm$^2$] | 2859 | 2932 | 2786 | 2859 | 3393 | 2687 |
| Standardabweichung [N/mm$^2$] | 81 | 78 | 92 | 101 | 106 | 171 |
| Biegefestigkeit [N/mm$^2$] | 27 | 28 | 25 | 27 | 37 | 29 |
| Standardabweichung [N/mm$^2$] | 2 | 2 | 3 | 2 | 3 | 4 |
| Breite [mm] | 15,2 | 15,1 | 15,3 | 15,2 | 15,1 | 14,9 |
| Stützweite [mm] | 78 | 78 | 78 | 78 | 78 | 78 |

Tabelle 2:

| Ergebnisse der Prüfungen der hergestellten Vergleichsplatten (Formkörper) aus beleimten Holzfasern mit den Bindern aus D1, D2, D3, V1, V2 und V3 bei 180 °C verpresst | | | | | | |
|---|---|---|---|---|---|---|
| Formkörper | FPD1 | FPD2 | FPD3 | FPV1 | FPV2 | FPV3 |
| Binder | D1 | D2 | D3 | V1 | V2 | V3 |
| Plattendicke [mm] | 6,0 | 6,0 | 6,03 | 6,03 | 5,98 | 6,2 |
| Dichte [g/cm$^3$] | 0,84 | 0,85 | 0,84 | 0,86 | 0,83 | 0,83 |
| Wasseraufnahme nach 2 Std. [%] | 21 | 24 | 25 | 29 | 27 | 35 |
| Standardabweichung | 1 | 1 | 3 | 2 | 1 | 2 |
| Wasseraufnahme nach 24 Std. [%] | 74 | 71 | 87 | 124 | 129 | 112 |
| Standardabweichung [%] | 3 | 8 | 6 | 5 | 7 | 10 |
| Dickenquellung nach 2 Std. [%] | 9 | 10 | 12 | 22 | 24 | 18 |
| Standardabweichung [%] | 8 | 0 | 6 | 1 | 0 | 1 |
| Dickenquellung nach 24 Std. [%] | 33 | 35 | 38 | 87 | 90 | 56 |
| Standardabweichung [%] | 1 | 4 | 2 | 3 | 6 | 2 |
| Biege E - Modul ISO 178 [N/mm$^2$] | 853 | 961 | 2744 | 2859 | 3393 | 2687 |
| Standardabweichung [N/mm$^2$] | 86 | 79 | 74 | 81 | 106 | 171 |
| Biegefestigkeit [N/mm$^2$] | 30 | 32 | 28 | 28 | 27 | 35 |
| Standardabweichung [N/mm$^2$] | 1 | 1 | 1 | 2 | 3 | 4 |

(fortgesetzt)

| Ergebnisse der Prüfungen der hergestellten Vergleichsplatten (Formkörper) aus beleimten Holzfasern mit den Bindern aus D1, D2, D3, V1, V2 und V3 bei 180 °C verpresst | | | | | | |
|---|---|---|---|---|---|---|
| Formkörper | FPD1 | FPD2 | FPD3 | FPV1 | FPV2 | FPV3 |
| Binder | D1 | D2 | D3 | V1 | V2 | V3 |
| Breite [mm] | 15,1 | 15 | 15,4 | 15,2 | 15,1 | 14,9 |
| Stützweite [mm] | 78 | 78 | 78 | 78 | 78 | 78 |

Bei FPV3 erkennt man, dass erst bei höheren Temperaturen, 180°C im Vergleich zu 140°C, die Vernetzung des Systems zu einer Verbesserung der Wasserbeständigkeit führt. Die erfindungsgemäßen Beispiele weisen dagegen auch schon bei niedrigen Temperaturen geringere Werten für die Wasseraufnahme und Dickenquellung auf. Zwar sind die Vergleichsbindemittel V1 und V2 bei 140 °C schlechter und werden mit Temperaturerhöhung besser, aber das Niveau der erfindungsgemäßen Beispiele wird nicht erreicht.

## Patentansprüche

1. Verfahren zur Herstellung eines thermoverformbaren Polymer/Faser-Komposits unter Verwendung eines Polymeren P und eines faserförmigen Substrats, wobei letzteres Partikel mit einem Verhältnis von ihrer längsten Ausdehnung zu ihrer kürzesten Ausdehnung von wenigstens 3 sind, wobei

   • das faserförmige Substrat, in einen Gasstrom eingebracht wird, danach
   • das faserförmige Substrat im Gasstrom mit einer wässrigen Dispersion eines Polymeren P mit einer Glas-übergangstemperatur $T_g \geq 35$ und $\leq 150$ °C gemessen nach DIN EN ISO 11357-2 (2013-09) in Kontakt gebracht wird, danach
   • das mit der wässrigen Dispersion des Polymeren P in Kontakt gebrachte faserförmige Substrat im Gasstrom getrocknet und anschließend abgeschieden wird, danach
   • das erhaltene abgeschiedene faserförmige Substrat in einen Faserflor überführt wird, und danach
   • der erhaltene Faserflor bei einer Temperatur $\geq$ der Glasübergangstemperatur Tg des Polymers P zu dem Polymer/Faser-Komposit verdichtet wird, wobei sich die Dichte des Polymer/Faser-Komposits im Vergleich zum entsprechenden Faserflor um einen Faktor $\geq 3$ erhöht,

   **dadurch gekennzeichnet, dass** die wässrige Dispersion des Polymeren P erhalten wird durch radikalisch initiierte Emulsionspolymerisation einer Monomerzusammensetzung aus

   | | |
   |---|---|
   | 5 bis 30 Gew.-%, | eines oder mehrerer Monomere M1, ausgewählt unter Estern der Acryl- und/oder Methacrylsäure mit 2 bis 8 C-Atome aufweisenden Alkanolen |
   | 70 bis 95 Gew.-% | Styrol und/oder Methylmethacrylat (M2), und |
   | 0 bis 10 Gew.-% | wenigstens einer weiteren ethylenisch ungesättigten Verbindung (M3), welche mit den Monomeren M1 und M2 copolymerisierbar ist, |

   jeweils bezogen auf die Gesamtmenge der Monomere M,
   in einem wässrigen Medium in Gegenwart eines Polymers A oder einer Polymermischung A, wobei das Polymere A beziehungsweise die Polymermischung A aufgebaut ist aus

   | | |
   |---|---|
   | 40 bis 70 Gew.-% | Acrylsäure (Monomer A1), |
   | 30 bis 60 Gew.-% | Maleinsäure und/oder Maleinsäureanhydrid (Monomer A2), |
   | 0 bis 5 Gew.-% | wenigstens einer weiteren ethylenisch ungesättigten Verbindung, welche mit den Monomeren A1 und A2 copolymerisierbar ist (Monomer A3), |

   und wobei sich die Gesamtmengen der Monomere A zu 100 Gew.-% addieren,
   mit der Maßgabe, dass weder das Polymer A noch die Polymermischung A aufgebaut ist aus einem Ester, der ausgewählt ist unter den Estern ethylenisch ungesättigter Monocarbonsäuren mit mindestens zwei Hydroxylgruppen aufweisenden Aminen, den Halbestern und den Diestern ethylenisch ungesättigter Dicarbonsäuren mit mindestens zwei Hydroxylgruppen aufweisenden Aminen.

**2.** Verfahren nach Anspruch 1, **dadurch gekennzeichnet, dass** als faserförmiges Substrat eine Naturfaser eingesetzt wird.

**3.** Verfahren nach Anspruch 1 oder 2, **dadurch gekennzeichnet, dass** das Polymer A ein gewichtsmittleres Molekulargewicht Mw ≥ 1000 und ≤ 20000 g/mol aufweist, bestimmt gelpermeationschromatographisch mit einem Polyacrylsäure-Natriumsalz als Standard nach DIN EN ISO 13885-3.

**4.** Verfahren nach einem der Ansprüche 1 bis 3, **dadurch gekennzeichnet, dass** die wässrige Dispersion des Polymeren P erhalten wird durch radikalische initiierte Emulsionspolymerisation in einem wässrigen Medium in Gegenwart einer Polymermischung A, wobei die Polymermischung A

| | |
|---|---|
| 10 bis 30 Gew.-% | eines Polymers A1 mit einem gewichtsmittleren Molekulargewicht ≥ 7000 und ≤ 20000 g/mol und |
| 70 bis 90 Gew.-% | eines Polymers A2 mit einem gewichtsmittleren Molekulargewicht ≥ 1000 und ≤ 5000 g/mol |

bezogen auf die Gesamtmenge Polymermischung A, enthält.

**5.** Verfahren nach einem der Ansprüche 1 bis 4, **dadurch gekennzeichnet, dass** das Mengenverhältnis von Polymer A zu Gesamtmenge an Monomeren M im Bereich von 10:90 bis 50:50 liegt bzw. der Polymermischung A zu Gesamtmenge an Monomeren M im Bereich von 10:90 bis 50:50 liegt.

**6.** Verfahren nach einem der Ansprüche 1 bis 5, **dadurch gekennzeichnet, dass** die Glasübergangstemperatur des Polymers P ≥ 60 °C und ≤ 150°C ist.

**7.** Verfahren nach einem der Ansprüche 1 bis 6, **dadurch gekennzeichnet, dass** die wässrige Dispersion des Polymeren P erhältlich ist durch radikalisch initiierte Emulsionspolymerisation einer Monomerenzusammensetzung aus

| | |
|---|---|
| 5 bis 30 Gew.-%, | eines oder mehrerer Monomere M1, ausgewählt unter Estern der Acryl- und/oder Methacrylsäure mit 2 bis 8 C-Atome aufweisenden Alkanolen |
| 70 bis 94,9 Gew.-% | Styrol und/oder Methylmethacrylat (M2), |
| 0,1 bis 10 Gew.-% | wenigstens einer weiteren ethylenisch ungesättigten Verbindung (M3), welche mit den Monomeren M1 und M2 copolymerisierbar ist, wovon 0,1 bis 5,0 Gew.-% bezogen auf die Gesamtmonomere M Glycidylacrylat und/oder Glycidylmethacrylat ist, |

jeweils bezogen auf die Gesamtmenge der Monomere M.

**8.** Verfahren nach einem der Ansprüche 1 bis 7, **dadurch gekennzeichnet, dass** die wässrige Dispersion des Polymeren P erhältlich ist durch radikalische initiierte Emulsionspolymerisation einer Monomerenzusammensetzung aus

| | |
|---|---|
| 5 bis 20 Gew.-% | Ethylacrylat, Propylacrylat, n-Butylacrylat, i-Butylacrylat, Hexylacrylat und/oder 2-Ethylhexylacrylat, |
| 70 bis 94,9 Gew.-% | Styrol und/oder Methylmethacrylat, |
| 0,1 bis 5,0 Gew.-% | Glycidylacrylat und/oder Glycidylmethacrylat, |
| 0 bis 5,0 Gew.-% | Acrylsäure, Methacrylsäure, 2-Hydroxyethyl-, 2-Hydroxypropylund/oder 3-Hydroxypropylacrylat und/oder 2-Hydroxyethyl-, 2-Hydroxypropyl- und/oder 3-Hydroxypropylmethacrylat, |
| 0 bis 2,0 Gew.-% | 1,4-Butylenglykoldiacrylat 1,4-Butylenglykoldi methacrylat, 1,2-, 1,3- und/oder 1,4-Divinylbenzol, Allylacrylat und/oder Allylmethacrylat |

jeweils bezogen auf die Gesamtmenge der Monomere M.

9. Verfahren nach einem der Ansprüche 1 bis 8, **dadurch gekennzeichnet, dass** die Dispersion von Polymer P ≤3 Gew.-% eines wenigsten zwei Hydroxylgruppen aufweisenden Amins bezogen auf die Summe aus Polymer A und Gesamtmonomere M beziehungsweise bezogen auf die Summe aus Polymermischung A und Gesamtmonomere M enthält.

10. Verfahren nach einem der Ansprüche 1 bis 9, **dadurch gekennzeichnet, dass** das erhaltene thermoverformbare Polymer/Faser-Komposit ein Flächengewicht ≥ 1000 und ≤ 30000 g/m$^2$ aufweist.

11. Verfahren nach einem der Ansprüche 1 bis 10, **dadurch gekennzeichnet, dass** das erhaltene thermoverformbare Polymer/Faser-Komposit flächenförmig ist.

12. Thermoverformbares Polymer/Faser-Komposit erhältlich nach einem Verfahren gemäß einem der Ansprüche 1 bis 11.

13. Verwendung des thermoverformbaren Polymer/Faser-Komposits gemäß Anspruch 12 zur Herstellung eines Polymer/Faser-Formteils, welches sich in seiner Form vom eingesetzten Polymer/Faser-Komposit unterscheidet.

14. Verfahren zur Herstellung eines Polymer/Faser-Formteils, **dadurch gekennzeichnet, dass** das thermoverformbare Polymer/Faser-Komposit gemäß Anspruch 12 auf eine Temperatur ≥ der Glasübergangstemperatur $T_g$ des Polymer P aufgeheizt wird und bei einer Temperatur ≥ der Glasübergangstemperatur $T_g$ des Polymer P in die gewünschte Form des Polymer/Faser-Formteils gebracht wird und danach das erhaltene Polymer/Faser-Formteil unter Beibehaltung seiner Form auf eine Temperatur < der Glasübergangstemperatur $T_g$ des Polymer P abgekühlt wird.

15. Polymer/Faser-Formteil erhältlich nach einem Verfahren gemäß Anspruch 14.

16. Verwendung eines Polymer/Faser-Formteils gemäß Anspruch 15 als Möbelformteil, Wanddekorteil oder Interieurbauteil im Fahrzeugbau.

17. Verfahren zur Herstellung einer wässrigen Dispersion des Polymeren P gemäß einem der Ansprüche 1 und 3 bis 8 mittels radikalisch initiierter Emulsionspolymerisation einer Monomerzusammensetzung aus

> 5 bis 30 Gew.-%, eines oder mehrerer Monomere M1, ausgewählt unter Estern der Acryl- und/oder Methacrylsäure mit 2 bis 8 C-Atome aufweisenden Alkanolen
> 70 bis 95 Gew.-% Styrol und/oder Methylmethacrylat (M2), und
> 0 bis 10 Gew.-% wenigstens einer weiteren ethylenisch ungesättigten Verbindung (M3), welche mit den Monomeren M1 und M2 copolymerisierbar ist,

> jeweils bezogen auf die Gesamtmenge der Monomere M,
> in einem wässrigen Medium in Gegenwart eines Polymers A oder einer Polymermischung A, wobei das Polymere A beziehungsweise die Polymermischung A aufgebaut ist aus

> > 40 bis 70 Gew.-% Acrylsäure (Monomer A1),
> > 30 bis 60 Gew.-% Maleinsäure und/oder Maleinsäureanhydrid (Monomer A2),
> > 0 bis 5 Gew.-% wenigstens einer weiteren ethylenisch ungesättigten Verbindung, welche mit den Monomeren A1 und A2 copolymerisierbar ist (Monomer A3),

> und wobei sich die Gesamtmengen der Monomere A zu 100 Gew.-% addieren,
> mit der Maßgabe, dass weder das Polymer A noch die Polymermischung A aufgebaut ist aus einem Ester, der ausgewählt ist unter den Estern ethylenisch ungesättigter Monocarbonsäuren mit mindestens zwei Hydroxylgruppen aufweisenden Aminen, den Halbestern und den Diestern ethylenisch ungesättigter Dicarbonsäuren mit mindestens zwei Hydroxylgruppen aufweisenden Aminen.

18. Wässrige Dispersion des Polymeren P erhältlich nach einem Verfahren gemäß Anspruch 17.

**Claims**

1. A process for producing a thermoformable polymer/fiber composite using a polymer P and a fibrous substrate, where the latter are particles having a ratio of their longest extent to their shortest extent of at least 3, where

   • the fibrous substrate is introduced into a gas stream, then
   • the fibrous substrate in the gas stream is contacted with an aqueous dispersion of a polymer P having a glass transition temperature $T_g \geq 35$ and $\leq 150°C$ measured to DIN EN ISO 11357-2 (2013-09), then
   • the fibrous substrate that has been contacted with the aqueous dispersion of the polymer P is dried in the gas stream and then deposited, then
   • the deposited fibrous substrate obtained is converted to a fiber web, and then
   • the resultant fiber web is consolidated at a temperature $\geq$ the glass transition temperature Tg of polymer P to give the polymer/fiber composite, where the density of the polymer/fiber composite is increased by a factor of $\geq 3$ compared to the corresponding fiber web, wherein the aqueous dispersion of the polymer P is obtained by free-radically initiated emulsion polymerization of a monomer composition composed of

   5% to 30% by weight of one or more monomers M1 selected from esters of acrylic and/or methacrylic acid with alkanols having 2 to 8 carbon atoms,
   70% to 95% by weight of styrene and/or methyl methacrylate (M2), and
   0% to 10% by weight of at least one further ethylenically unsaturated compound (M3) which is copolymerizable with monomers M1 and M2,
   based in each case on the total amount of the monomers M,
   in an aqueous medium in the presence of a polymer A or a polymer mixture A, where polymer A or polymer mixture A is formed from
   40% to 70% by weight of acrylic acid (monomer A1),
   30% to 60% by weight of maleic acid and/or maleic anhydride (monomer A2),
   0% to 5% by weight of at least one further ethylenically unsaturated compound which is copolymerizable with monomers A1 and A2 (monomer A3),
   and where the total amounts of monomers A add up to 100% by weight,
   with the proviso that neither polymer A nor polymer mixture A is formed from an ester selected from the esters of ethylenically unsaturated monocarboxylic acids with amines having at least two hydroxyl groups, the monoesters and the diesters of ethylenically unsaturated dicarboxylic acids with amines having at least two hydroxyl groups.

2. The process according to claim 1, wherein the fibrous substrate used is a natural fiber.

3. The process according to claim 1 or 2, wherein polymer A has a weight-average molecular weight Mw of $\geq 1000$ and $\leq 20\,000$ g/mol, determined by gel permeation chromatography using a polyacrylic acid sodium salt as standard to DIN EN ISO 13885-3.

4. The process according to any of claims 1 to 3, wherein the aqueous dispersion of polymer P is obtained by free-radically initiated emulsion polymerization in an aqueous medium in the presence of a polymer mixture A, where the polymer mixture A comprises
   10% to 30% by weight of a polymer A1 having a weight-average molecular weight of $\geq 7000$ and $\leq 20\,000$ g/mol and
   70% to 90% by weight of a polymer A2 having a weight-average molecular weight of $\geq 1000$ and $\leq 5000$ g/mol, based on the total amount of polymer mixture A.

5. The process according to any of claims 1 to 4, wherein the ratio of the amount of polymer A to the total amount of monomers M is in the range from 10:90 to 50:50, and that of polymer mixture A to the total amount of monomers M is in the range from 10:90 to 50:50.

6. The process according to any of claims 1 to 5, wherein the glass transition temperature of polymer P is $\geq 60°C$ and $\leq 150°C$.

7. The process according to any of claims 1 to 6, wherein the aqueous dispersion of polymer P is obtainable by free-radically initiated emulsion polymerization of a monomer composition composed of

   5% to 30% by weight of one or more monomers M1 selected from esters of acrylic and/or methacrylic acid with alkanols having 2 to 8 carbon atoms,
70% to 94.9% by weight of styrene and/or methyl methacrylate (M2),
0.1% to 10% by weight of at least one further ethylenically unsaturated compound (M3) which is copolymerizable with monomers M1 and M2, of which 0.1% to 5.0% by weight, based on total monomers M, is glycidyl acrylate and/or glycidyl methacrylate,
based in each case on the total amount of the monomers M.

8. The process according to any of claims 1 to 7, wherein the aqueous dispersion of polymer P is obtainable by free-radically initiated emulsion polymerization of a monomer composition composed of

5% to 20% by weight of ethyl acrylate, propyl acrylate, n-butyl acrylate, i-butyl acrylate, hexyl acrylate and/or 2-ethylhexyl acrylate,
70% to 94.9% by weight ofstyrene and/or methyl methacrylate,
0.1% to 5.0% by weight ofglycidyl acrylate and/or glycidyl methacrylate,
0% to 5.0% by weight of acrylic acid, methacrylic acid, 2-hydroxyethyl acrylate, 2-hydroxypropyl acrylate and/or 3-hydroxypropyl acrylate and/or 2-hydroxyethyl methacrylate, 2-hydroxypropyl methacrylate and/or 3-hydroxypropyl methacrylate,
0% to 2.0% by weight of 1,4-butylene glycol diacrylate, 1,4-butylene glycol dimethacrylate, 1,2-, 1,3- and/or 1,4-divinylbenzene, allyl acrylate and/or allyl methacrylate,
based in each case on the total amount of the monomers M.

9. The process according to any of claims 1 to 8, wherein the dispersion of polymer P comprises $\leq$ 3% by weight of an amine having at least two hydroxyl groups based on the sum total of polymer A and total monomers M or based on the sum total of polymer mixture A and total monomers M.

10. The process according to any of claims 1 to 9, wherein the thermoformable polymer/fiber composite obtained has a basis weight of $\geq$ 1000 and $\leq$ 30 000 g/m$^2$.

11. The process according to any of claims 1 to 10, wherein the thermoformable polymer/fiber composite obtained is two-dimensional.

12. A thermoformable polymer/fiber composite obtainable by a process according to any of claims 1 to 11.

13. The use of the thermoformable polymer/fiber composite according to claim 12 for production of a polymer/fiber molding which differs in shape from the polymer/fiber composite used.

14. A process for producing a polymer/fiber molding, which comprises heating the thermoformable polymer/fiber composite according to claim 12 up to a temperature $\geq$ the glass transition temperature $T_g$ of polymer P and converting it to the desired shape of the polymer/fiber molding at a temperature $\geq$ the glass transition temperature $T_g$ of polymer P and then cooling the resultant polymer/fiber molding down to a temperature < the glass transition temperature $T_g$ of polymer P while maintaining its shape.

15. A polymer/fiber molding obtainable by a process according to claim 14.

16. The use of a polymer/fiber molding according to claim 15 as a furniture molding, wall decor part or interior component in vehicle construction.

17. A process for producing an aqueous dispersion of polymer P according to any of claims 1 and 3 to 8 by free-radically initiated emulsion polymerization of a monomer composition composed of

5% to 30% by weight of one or more monomers M1 selected from esters of acrylic and/or methacrylic acid with alkanols having 2 to 8 carbon atoms,
70% to 95% by weight of styrene and/or methyl methacrylate (M2), and
0% to 10% by weight of at least one further ethylenically unsaturated compound (M3) which is copolymerizable with monomers M1 and M2,
based in each case on the total amount of the monomers M,
in an aqueous medium in the presence of a polymer A or a polymer mixture A, where polymer A or polymer mixture A is formed from

40% to 70% by weight of acrylic acid (monomer A1),

30% to 60% by weight of maleic acid and/or maleic anhydride (monomer A2),

0% to 5% by weight of at least one further ethylenically unsaturated compound which is copolymerizable with monomers A1 and A2 (monomer A3),

and where the total amounts of monomers A add up to 100% by weight,

with the proviso that neither polymer A nor polymer mixture A is formed from an ester selected from the esters of ethylenically unsaturated monocarboxylic acids with amines having at least two hydroxyl groups, the monoesters and the diesters of ethylenically unsaturated dicarboxylic acids with amines having at least two hydroxyl groups.

**18.** An aqueous dispersion of polymer P obtainable by a process according to claim 17.


**Revendications**

**1.** Procédé de fabrication d'un composite polymère/fibres thermoformable en utilisant un polymère P et un substrat fibreux, ce dernier étant des particules dont le rapport entre leur dimension la plus longue et leur dimension la plus courte est d'au moins 3,

• le substrat fibreux étant introduit dans un flux gazeux, ensuite

• le substrat fibreux étant ensuite mis en contact dans le flux gazeux avec une dispersion aqueuse d'un polymère P ayant une température de transition vitreuse $T_g \geq 35$ et $\leq 150\,°C$ mesurée selon DIN EN ISO 11357-2 (2013-09), ensuite

• le substrat fibreux mis en contact dans le flux gazeux avec la dispersion aqueuse du polymère P étant séché et ensuite séparé, ensuite

• le substrat fibreux séparé obtenu étant transformé en un voile de fibres et ensuite

• Le voile de fibres obtenu étant compacté à une température $\geq$ la température de transition vitreuse Tg du polymère P afin de former le composite polymère/fibres, la densité du composite polymère/fibres augmentant d'un facteur $\geq 3$ par rapport au voile de fibres correspondant,

**caractérisé en ce que** la dispersion aqueuse du polymère P est obtenue par polymérisation en émulsion initiée par voie radicalaire d'une composition monomère constituée de

5 à 30 % en poids d'un ou de plusieurs monomères M1, choisis parmi les esters de l'acide acrylique et/ou méthacrylique avec des alcanols présentant 2 à 8 atomes de carbone

70 à 95 % en poids de styrène et/ou de méthacrylate de méthyle (M2), et

0 à 10 % en poids d'au moins un composé éthyléniquement insaturé supplémentaire (M3) qui est copolymérisable avec les monomères M1 et M2,

respectivement en référence à la quantité totale des monomères M,

dans un milieu aqueux en présence d'un polymère A ou d'un mélange de polymères A, le polymère A ou le mélange de polymères A étant constitué de

40 à 70 % en poids d'acide acrylique (monomère A1),

30 à 60 % en poids d'acide maléique et/ou d'anhydride maléique (monomère A2),

0 à 5 % en poids d'au moins un composé éthyléniquement insaturé supplémentaire qui copolymérisable avec les monomères A1 et A2 (monomère A3),

et les quantités totales des monomères A s'additionnant à 100 % en poids,

à condition que ni le polymère A ni le mélange de polymères A ne soient constitués d'un ester choisi parmi les esters d'acides monocarboxyliques éthyléniquement insaturés avec des amines présentant au moins deux groupes hydroxyle, les semi-esters et les diesters d'acides dicarboxyliques éthyléniquement insaturés avec des amines présentant au moins deux groupes hydroxyle.

**2.** Procédé selon la revendication 1, **caractérisé en ce que** le substrat fibreux utilisé et une fibre naturelle.

**3.** Procédé selon la revendication 1 ou 2, **caractérisé en ce que** le polymère A présente une masse moléculaire moyenne en poids Mw $\geq 1\,000$ et $\leq 20\,000$ g/mol, déterminée par chromatographie par perméation de gel en utilisant un sel de sodium d'acide polyacrylique comme étalon selon DIN EN ISO 13885-3.

**4.** Procédé selon l'une des revendications 1 à 3, **caractérisé en ce que** la dispersion aqueuse du polymère P est obtenue par polymérisation en émulsion initiée par voie radicalaire dans un milieu aqueux en présence d'un mélange de polymères A, le mélange de polymères A comprenant

10 à 30 % en poids d'un polymère A1 ayant une masse moléculaire moyenne en poids ≥ 7 000 et ≤ 20 000 g/mol et 70 à 90 % en poids d'un polymère A2 ayant une masse moléculaire moyenne en poids ≥ 1 000 et ≤ 5 000 g/mol en référence à la quantité totale du mélange de polymères A.

5. Procédé selon l'une des revendications 1 à 4, **caractérisé en ce que** le rapport quantitatif entre le polymère A et la quantité totale de monomères M est compris dans la plage de 10:90 à 50:50, ou **en ce que** le rapport quantitatif entre le mélange de polymères A et la quantité totale de monomères M est compris dans la plage de 10:90 à 50:50.

6. Procédé selon l'une des revendications 1 à 5, **caractérisé en ce que** la température de transition vitreuse du polymère est P ≥ 60 °C et ≤ 150 °C.

7. Procédé selon l'une des revendications 1 à 6, **caractérisé en ce que** la dispersion aqueuse du polymère P peut être obtenue par polymérisation en émulsion initiée par voie radicalaire d'une composition monomère constituée de

5 à 30 % en poids d'un ou de plusieurs monomères M1, choisis parmi les esters de l'acide acrylique et/ou méthacrylique avec des alcanols présentant 2 à 8 atomes de carbone
70 à 94,9 % en poids de styrène et/ou de méthacrylate de méthyle (M2),
0,1 à 10 % en poids d'au moins un composé éthyléniquement insaturé supplémentaire (M3) qui est copolymérisable avec les monomères M1 et M2, dont 0,1 à 5,0 % en poids, en référence au total des monomères M, sont de l'acrylate de glycidyle et/ou du méthacrylate de glycidyle,
respectivement en référence à la quantité totale des monomères M.

8. Procédé selon l'une des revendications 1 à 7, **caractérisé en ce que** la dispersion aqueuse du polymère P peut être obtenue par polymérisation en émulsion initiée par voie radicalaire d'une composition monomère constituée de

5 à 20 % en poids d'acrylate d'éthyle, d'acrylate de propyle, d'acrylate de n-butyle, d'acrylate d'i-butyle, d'acrylate d'hexyle et/ou d'acrylate de 2-éthylhexyle,
70 à 94,9 % en poids de styrène et/ou de méthacrylate de méthyle,
0,1 à 5,0 % en poids d'acrylate de glycidyle et/ou de méthacrylate de glycidyle,
0 à 5,0 % en poids d'acide acrylique, d'acide méthacrylique, d'acrylate de 2-hydroxyéthyle, de 2-hydroxypropyle et/ou de 3-hydroxypropyle et/ou de méthacrylate de 2-hydroxyéthyle, de 2-hydroxypropyle et/ou de 3-hydroxypropyle,
0 à 2,0 % en poids de diacrylate de 1,4-butylèneglycol, de diméthacrylate de 1,4-butylèneglycol, de 1,2-, 1,3- et/ou 1,4-divinylbenzène, d'acrylate d'allyle et/ou de méthacrylate d'allyle
respectivement en référence à la quantité totale des monomères M.

9. Procédé selon l'une des revendications 1 à 8, **caractérisé en ce que** la dispersion de polymère P contient ≤ 3 % en poids d'une amine présentant au moins deux groupes hydroxyle, en référence à la somme du polymère a et du total des monomères M ou en référence à la somme du mélange de polymères A et du total des monomères M.

10. Procédé selon l'une des revendications 1 à 9, **caractérisé en ce que** le composite polymère/fibres thermoformable obtenu présente un poids surfacique ≥ 1 000 et ≤ 30 000 g/m$^2$.

11. Procédé selon l'une des revendications 1 à 10, **caractérisé en ce que** le composite polymère/fibres thermoformable obtenu est de forme plate.

12. Composite polymère/fibres thermoformable pouvant être obtenu par un procédé selon l'une des revendications 1 à 11.

13. Utilisation du composite polymère/fibres thermoformable selon la revendication 12 pour la fabrication d'une pièce moulée polymère/fibres qui se distingue par sa forme du composite polymère/fibres utilisé.

14. Procédé de fabrication d'une pièce moulée polymère/fibres, **caractérisé en ce que** le composite polymère/fibres thermoformable selon la revendication 12 est chauffé à une température ≥ à la température de transition vitreuse $T_g$ du polymère P et amené à une température ≥ à la température de transition vitreuse $T_g$ du polymère P dans la forme souhaitée de la pièce moulée polymère/fibres, et ensuite la pièce moulée polymère/fibres obtenue est refroidie à une température < à la température de transition vitreuse $T_g$ du polymère P tout en conservant sa forme.

15. Pièce moulée polymère/fibres pouvant être obtenue par un procédé selon la revendication 14.

16. Utilisation d'une pièce moulée polymère/fibres selon la revendication 15 en tant que pièce moulée pour meuble, pièce décorative murale ou composant d'intérieur dans la construction automobile.

17. Procédé de préparation d'une dispersion aqueuse du polymère P selon l'une des revendications 1 et 3 à 8 au moyen d'une polymérisation en émulsion initiée par voie radicalaire d'une composition de monomères constituée de 5 à 30 % en poids d'un ou de plusieurs monomères M1, choisis parmi les esters de l'acide acrylique et/ou méthacrylique avec des alcanols présentant 2 à 8 atomes de carbone

   70 à 95 % en poids de styrène et/ou de méthacrylate de méthyle (M2), et
   0 à 10 % en poids d'au moins un composé éthyléniquement insaturé supplémentaire (M3) qui est copolymérisable avec les monomères M1 et M2,
   respectivement en référence à la quantité totale des monomères M,
   dans un milieu aqueux en présence d'un polymère A ou d'un mélange de polymères A, le polymère A ou le mélange de polymères A étant constitué de
   40 à 70 % en poids d'acide acrylique (monomère A1),
   30 à 60 % en poids d'acide maléique et/ou d'anhydride maléique (monomère A2),
   0 à 5 % en poids d'au moins un composé éthyléniquement insaturé supplémentaire qui copolymérisable avec les monomères A1 et A2 (monomère A3),
   et les quantités totales des monomères A s'additionnant à 100 % en poids,
   à condition que ni le polymère A ni le mélange de polymères A ne soient constitués d'un ester choisi parmi les esters d'acides monocarboxyliques éthyléniquement insaturés avec des amines présentant au moins deux groupes hydroxyle, les semi-esters et les diesters d'acides dicarboxyliques éthyléniquement insaturés avec des amines présentant au moins deux groupes hydroxyle.

18. Dispersions aqueuses du polymère P pouvant être obtenue par un procédé selon la revendication 17.

# EP 4 452 584 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 0127163 A
- WO 2017140520 A
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- EP 40419 B
- EP 567812 A
- EP 614922 A
- DE 4213965 A

### In der Beschreibung aufgeführte Nicht-Patentliteratur

- **A. ECHTE**. Handbuch der Technischen Polymerchemie. VCH, 1993
- **B. VOLLMERT**. Grundriss der Makromolekularen Chemie. E. Vollmert Verlag, 1988
- Methoden der organischen Chemie, Band XIV/1. **HOUBEN-WEYL**. Makromolekulare Stoffe. Georg-Thieme-Verlag, 1961, 411-420
- *Emulsionspolymerisation in Encyclopedia of Polymer Science and Engineering*, 1987, vol. 8, 659 ff
- **D.C. BLACKLEY**. *High Polymer Latices*, 1966, vol. 1, 35 ff
- **H. WARSON**. *The Applications of Synthetic Resin Emulsions*, 1972, 246 ff
- **D. DIEDERICH**. *Chemie in unserer Zeit*, 1990, vol. 24, 135-142
- Emulsion Polymerisation. Interscience Publishers, 1965
- **F. HÖLSCHER**. Dispersionen synthetischer Hochpolymerer. Springer-Verlag, 1969
- Encyclopedia of Polymer Science and Technology. John Wiley & Sons Inc., 1966, vol. 5, 847
- **T.G. FOX**. *Bull. Am. Phys. Soc.*, 1956, vol. 1, 123
- Ullmann's Encyclopädie der technischen Chemie. Verlag Chemie, 1980, vol. 19, 18, 4
- **BRANDRUP, J.** ; **IMMERGUT, E.H.** ; **GRULKE, E.A.** ; **ABE, A.** ; **BLOCH, D.R.** Polymer Handbook. Wiley-VCH, 2003
- Polyacrylates. **PENZEL, E.** ; **BALLARD, N.** ; **ASUA, J.M.** Ullmann's Encyclopedia of Industrial Chemistry. 2021